(19) Europäisches Patentamt
European Patent Office
Office européen des brevets

(11) Numéro de publication: **0 240 421 B1**

(12) # FASCICULE DE BREVET EUROPEEN

(45) Date de publication de fascicule du brevet: **18.12.91**

(51) Int. Cl.$^5$: **C08J 5/24**, C08G 59/30

(21) Numéro de dépôt: **87400683.6**

(22) Date de dépôt: **26.03.87**

(54) **Composition renforcée de résine époxyde, notamment sous forme de préimpregnés, précurseur de materiaux composites, materiaux composites obtenus et nouvelles résines époxydes à groupements sulfones.**

(30) Priorité: **28.03.86 FR 8604543**

(43) Date de publication de la demande:
**07.10.87 Bulletin 87/41**

(45) Mention de la délivrance du brevet:
**18.12.91 Bulletin 91/51**

(84) Etats contractants désignés:
**BE CH DE ES FR GB IT LI NL SE**

(56) Documents cités:
**EP-A- 0 049 687**
**EP-A- 0 135 647**
**FR-A- 2 519 639**
**GB-A- 2 114 135**
**US-A- 3 044 983**

**CHEMICAL PATENTS INDEX BASIC ABSTRACTS JOURNAL, section A, PLASDOC, Derwent Publications Ltd, London (GB)**

(73) Titulaire: **SOCIETE NATIONALE ELF AQUITAINE**
**Tour Elf, 2, Place de la Coupole, La Défense 6**
**F-92400 Courbevoie(FR)**

Titulaire: **PECHINEY**
**23, rue Balzac**
**F-75008 Paris(FR)**

(72) Inventeur: **Chenard, Jean-Yves**
**Résidence Shamrock B 19 bis, rue Bernès Cambot**
**F-64000 Pau(FR)**
Inventeur: **Dutouya, Alain**
**57 Avenue du 18è R.I.**
**F-64000 Pau(FR)**
Inventeur: **Gomez, Jean-Pierre**
**6 Boulevard de Loussère**
**F-64000 Pau(FR)**

(74) Mandataire: **Rochet, Michel**
**ATOCHEM Département Propriété Industrielle 4, Cours Michelet La Défense 10 Cedex 42**
**F-92091 Paris-La-Défense(FR)**

**EP 0 240 421 B1**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

## Description

L'invention a pour objet une composition renforcée de résine époxyde précurseur de matériaux composites à renfort fibres longues, notamment fibres longues de carbone. Elle se rapporte encore aux matériaux composites formés en utilisant une telle composition. Elle concerne enfin certaines résines époxydes en tant que produits nouveaux.

L'utilisation des matériaux composites à matrices organiques formées de résines époxydes durcies et renforts fibres longues, en particulier fibres longues de verre, de carbone ou encore de polyamides aromatiques, a fortement progressée au cours des dernières années. Toutefois, en ce qui concerne les matériaux composites du type précité à renfort fibres longues de carbone, les produits actuels présentent pour certaines applications des défauts qui freinent leur développement. Ainsi, dans le domaine de la construction aéronautique, on reproche aux matériaux composites à base de résines époxydes et à renfort fibres longues de carbone des performances insuffisantes en ce qui concerne la tolérance aux dommages, c'est-à-dire le maintien des propriétés après un choc, et la résistance au vieillissement chaud et humide.

L'invention vise à pallier les inconvénients précités en proposant une composition perfectionnée de résine époxyde à renfort fibres de carbone précurseur de matériaux composites, qui permet, entre autres, de produire des matériaux composites à renfort fibres longues de carbone, dont les propriétés et notamment la résistance au choc, la résistance à la flexion et la résistance au vieillissement chaud et humide sont substantiellement améliorées.

La composition renforcée de résine époxyde suivant l'invention précurseur de matériaux composites à renfort fibres de carbone, et tout spécialement de matériaux composites à renfort fibres longues de carbone, est du type comportant une ou plusieurs résines époxydes polyfonctionnelles non durcies un ou plusieurs durcisseurs de résines époxydes choisis parmi les diamines aromatiques et le dicyandiamide et une matière fibreuse de renfort consistant au moins pour moitié en fibres de carbone et elle se caractérise en ce qu'au moins l'une desdites résines époxydes renferme dans ses chaînes un ou plusieurs motifs divalent -Z- répondant à la formule

$$\left[ O\text{-}A\text{-}(OX)_p\text{-}O\text{-}R\text{-}SO_2\text{-}R\text{-}(OX)_p \right]_n$$

dans laquelle les symboles A et R, identiques ou différents, désignent des radicaux aromatiques divalents en $C_6$ à $C_{20}$, X représente le radical $-CH_2-CHOH-CH_2-$, p est égal à zéro ou 1 et n est un nombre allant de 1 à 500 et plus particulièrement de 1 à 200.

En particulier, dans la formule précitée, les radicaux A et R désignent des radicaux aromatiques divalents choisis parmi les restes aromatiques hydrocarbonés divalents mononucléaires en $C_6$ à $C_{20}$, les restes aromatiques divalents polynucléaires en $C_{12}$ à $C_{20}$ à noyaux enchaînés, les restes aromatiques hydrocarbonés divalents polynucléaires en $C_{10}$ à $C_{20}$ à noyaux condensés, les restes divalents aromatiques de formule -Ar-Y-Ar- dans laquelle -Ar- est un radical arylique divalent en $C_6$ à $C_{10}$ et -Y- représente -S-, -SO-, $-SO_2-$, -O-, -CO-, et les radicaux dérivant de tous ces restes par substitution par un ou plusieurs atomes d'halogène, notamment chlore ou fluor, ou par un ou plusieurs radicaux alcoxyles en $C_1$ à $C_4$.

Avantageusement la résine ou les résines époxydes difonctionnelles à groupements sulfones peuvent être choisies parmi les composés époxydes répondant à l'une ou l'autre des formules (I), (II) ou (III) ci-après :

(I) 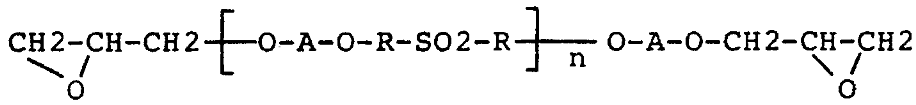

(II) 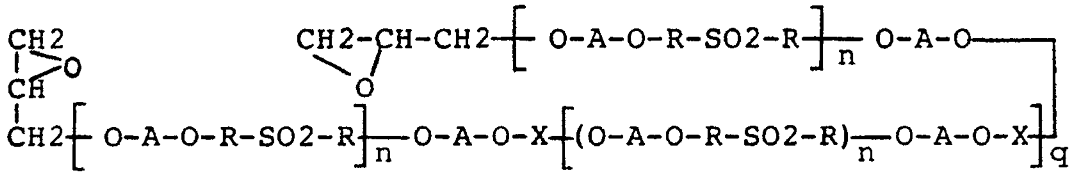

(III) 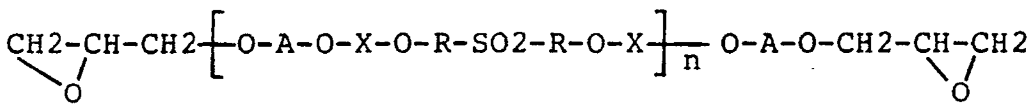

avec dans ces formules A, R et n ayant les significations données plus haut et q représentant zéro ou 1.

Des mélanges de composés de formules (I) ou/et de composés de formules (II) avec des composés de formule (III) peuvent être également utilisés pour constituer la composante époxyde à groupements sulfones de la composition suivant l'invention.

Les radicaux divalents -A- présents dans les chaînes des résines époxydes à groupements sulfones peuvent consister en particulier en radicaux divalents choisis parmi les radicaux suivants :

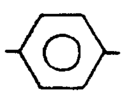 , 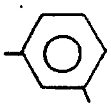 , 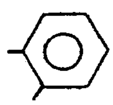 , 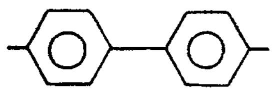 , 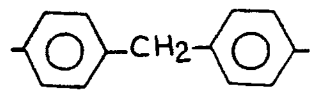 ,

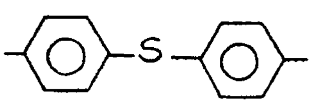 , 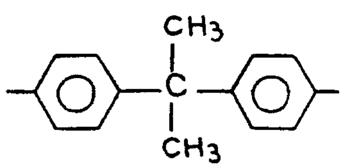 , 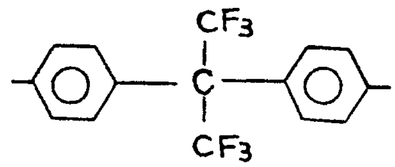 ,

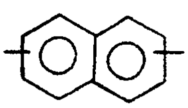 , 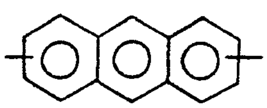

Quant au groupement -R-SO2-R- contenus dans les chaînes de la résines époxyde à groupements sulfones, il répond en particulier à la formule -R1-SO2-R1-, dans laquelle -R1-désigne un reste hydrocarboné aromatique divalent mononucléaire en C6 à C10 éventuellement substitué par un ou plusieurs atomes d'halogène, notamment chlore ou fluor.

De préférence, le groupement -R-SO2-R- répond à la formule

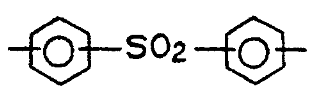

et tout spécialement à la formule

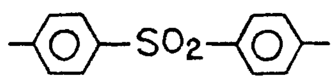

Les résines époxydes à groupements sulfones, qui sont présentes dans la composition suivant l'invention, ont des masses moléculaires qui sont comprises avantageusement entre 500 et 70 000 et se situent de préférence entre 800 et 50 000.

Dans la composition suivant l'invention, la quantité pondérale de résine époxyde à groupements sulfones représente avantageusement 5 à 100 %, et de préférence 5 à 50 % de la quantité pondérale totale de résine époxyde.

La fraction de résine époxyde ne renfermant pas de groupements sulfones peut consister en une ou plusieurs résines époxydes non durcies conventionnelles, lesdites résines ayant avantageusement des masses moléculaires comprises entre 500 et 70 000 et de préférence entre 800 et 50 000.

Ces résines époxydes conventionnelles non durcies peuvent être en particulier telles que diglycidyléthers des bisphénols A ou F, époxyphénolnovolacs, époxycrésolnovolacs, tétraglycidyléthers de la méthylène dianiline ou du tétraphénylol éthane, triglycidyléthers du paraaminophénol ou du triphénylol méthane, époxyhydantoines, époxycyanurates, époxycycloaliphatiques.

La composition suivant l'invention peut encore renfermer un ou plusieurs additifs consistant notamment en produits jouant le rôle de diluants réactifs, d'agents flexibilisants ou encore de monomères thermostables compatibles avec les résines époxydes.

A titre de diluants réactifs, dont l'utilisation permet de fluidifier la composition suivant l'invention, on peut faire appel à des composés tels que diglycidyléthers d'alcanediol et notamment diglycidyléther de butanediol, diglycidyl aniline ou toluidine, polyoxypropylène époxydés, phtalate de glycidyle.

Les agents flexibilisants, qui sont en général employés à des teneurs variant de 5 à 50 % en poids de la composition, peuvent consister soit en oligomères flexibles fonctionnalisés tels que caoutchoucs nitrile à terminaisons acides carboxyliques ou amines, bismaléimides, bisnorbornényle imides ou biscyanates à squelette flexible, soit en polymères thermoplastiques de haute masse moléculaire compatibles avec les résines époxydes et tels que polyéthersulfones, polyimides, terpolymères acrylonitrile/butadiène/styrène (terpolymères ABS).

Les monomères thermostables, dont l'addition en quantité inférieure à 30 % en poids de la composition conduit à une amélioration de la tenue en température des résines époxydes, peuvent être notamment des composés tels que bismaléimides ou encore bismaléimides triazines.

En vue de leur durcissement, les compositions suivant l'invention à base de résine époxyde sont additionnées d'un ou plusieurs durcisseurs pouvant être choisis parmi les divers durcisseurs conventionnels de résines époxydes, dont on peut trouver une description, par exemple, dans les livres "HANDBOOK OF EPOXY RESINS" de MM. LEE et NEVILLE ( MAC GRAW HILL ED. 1967), Chapitre 7 à 13 et 15-16, et "EPOXY RESINS : CHEMISTRY AND TECHNOLOGY" de MM. MAY et TANAKA (DEKKER ED. 1973), pages 239 à 325. Un durcisseur préféré suivant l'invention est constitué par le bis(amino-4-phényl)sulfone.

On peut suivant l'invention faire préréagir un durcisseur conventionnel de résine époxyde avec une ou plusieurs des résines époxydes à groupements sulfones définies précédemment pour former un adduct et utiliser l'adduct ainsi obtenu comme durcisseur modifié.

Les résines époxydes à groupements sulfones suivant l'invention peuvent être préparées soit en faisant appel au schéma réactionnel I consistant à faire réagir un composé de formule Cl-R-SO2-R-Cl sur un excès d'un sel alcalin ou alcalino-terreux d'un diphénol HO-A-OH en opérant dans un solvant aprotique polaire, notamment diméthylsulfoxyde ou encore diméthylacétamide, pour former un sel alcalin ou alcalino-terreux d'un diphénol intermédiaire de formule

$$H-\left[O-A-O-R-SO2-R\right]_n-O-A-OH$$

puis à époxyder le sel de diphénol intermédiaire ainsi obtenu, soit en utilisant le schéma réactionnel II consistant à effectuer une réaction de polyaddition, en masse en présence d'un catalyseur basique, entre un composé de formule HO-R-SO2-R-OH et un diglycidyléther de formule

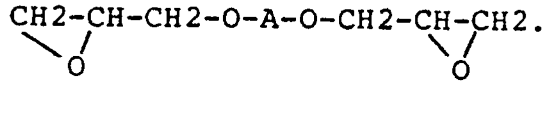

La synthèse réalisée en faisant appel au schéma réactionnel I donne naissance aux résines époxydes à groupements sulfones de formule I ou II définies précédemment. Cette synthèse peut avantageusement être mise en oeuvre en une seule étape, c'est-à-dire sans isoler le diphénol intermédiaire. Le rapport molaire Cl-R-SO2-R-Cl : HO-A-OH peut varier assez largement, avantageusement de 0,05 : 1 à 0,99 : 1 et

de préférence de 0,5 : 1 à 0,9 : 1, ledit rapport déterminant le poids moléculaire de la résine obtenue. Les résines de formule I sont obtenues lorsqu'on utilise un large excès molaire de l'agent d'époxydation, à savoir l'épichlorhydrine, par rapport au sel alcalin ou alcalino-terreux du diphénol intermédiaire, par exemple 5 fois la quantité stoechiométrique ou plus et que cet agent d'époxydation est ajouté rapidement au milieu réactionnel. En utilisant une quantité d'agent d'époxydation inférieure à 5 fois la quantité stoechiométrique ou en ajoutant ledit agent d'époxydation plus lentement au milieu réactionnel, on obtient des résines de formule II caractérisées par la présence dans leurs chaînes de segments aliphatiques hydroxylés résultant de l'action du sel du diphénol intermédiaire défini plus haut sur la résine de formule I déjà formée. Les résines de formule II ont une masse moléculaire et une viscosité supérieures à celles des résines de formule I ainsi qu'une teneur inférieure en fonctions époxydes.

La synthèse réalisée en faisant appel au schéma réactionnel II donne naissance aux résines époxydes à groupements sulfones de formule III. Pour cette synthèse le rapport molaire HO-R-SO2-R-OH : diglycidyléther peut varier de 0,05 : 1 à 0,95 : 1. Les résines de formule III possèdent une teneur maximale en chaînons aliphatiques flexibles hydroxylés.

La composition de résine époxyde suivant l'invention est utilisable pour la fabrication de matériaux composites pour lesquels la résine époxyde constitue après durcissement la matrice dans laquelle sont noyées les fibres de la matière de renfort.

Comme indiqué précédemment, la matière fibreuse de renfort de la composition suivant l'invention qui est avantageusement du type à fibres longues, consiste au moins pour moitié en fibres de carbone, c'est-à-dire qu'elle renferme, en volume, de 50 à 100 % de fibres de carbone et de 50 à 0 % de fibres d'un ou plusieurs autres types, par exemple fibres de polyamides aromatiques, fibres céramiques. L'association des fibres de carbone à d'autres fibres pour constituer la matière fibreuse de renfort peut prendre la forme de mélanges de telles fibres ou encore la forme de fibres mixtes. Tout spécialement la matière fibreuse de renfort est une matière en fibres longues de carbone à grand allongement. Par expression "fibres de carbone", on entend suivant l'invention aussi bien les fibres de carbone non graphitisées que les fibres de carbone partiellement ou totalement graphitisées.

La matière fibreuse de renfort peut se présenter sous diverses formes, notamment sous la forme de fils, de torons, de rubans, de tissus, de nappes.

Dans la composition suivant l'invention, la matière fibreuse de renfort est en proportions telles que dans le volume global occupé par la composante de résine époxyde et la matière fibreuse de renfort, le volume de ladite matière fibreuse représente 20 à 80 % et de préférence 40 à 70 %.

Pour produire le matériau composite, la composition suivant l'invention est traitée par l'une quelconque des techniques connues permettant de produire des matériaux composites à partir de compositions de résines thermodurcissables et d'une matière fibreuse de renfort. Des matériaux composites à renfort fibres longues peuvent être produits, par exemple, par enroulement filamentaire, par moulage à l'autoclave ou à la presse de fibres préimprégnées, par pultrusion, par réaction injection des résines sur préformes de fibres sèches.

Une mise en oeuvre préférée dans le cadre de l'invention consiste à partir de la composition renforcée se présentant sous la forme de préimprégnés, lesdits préimprégnés étant produits par dépôt de la résine renfermant un ou plusieurs durcisseurs sur la matière fibreuse, ledit dépôt étant réalisé soit à l'aide d'une solution de la résine dans un solvant volatil, soit directement par la résine à l'état fondu, et à traiter les préimprégnés par la technique choisie, par exemple moulage à l'autoclave ou à la presse, pour former le matériau composite.

Dans cette forme de mise en oeuvre, les durcisseurs préférés sont soit les diamines aromatiques, soit le dicyandiamide.

Les exemples suivants sont donnés à titre non limitatif pour illustrer l'invention.

EXEMPLE 1 :

Préparation de résines époxydes à groupements sulfones de formule I :

Essai A : Résine dérivée du bisphénol A

On opérait dans un réacteur à double enveloppe muni d'un agitateur à ancre, d'un séparateur à reflux et pouvant être utilisé sous pression réduite.

Dans le réacteur renfermant un mélange de 1,4 l de diméthylsulfoxyde et de 0,7 l de toluène porté à 60° C, on dissolvait 342,6 g (1,5 moles) de bis (hydroxy-4 phényl)-2,2 propane (encore appelé bisphénolA). On ajoutait ensuite au contenu du réacteur 120 g (3 moles) de NaOH sous la forme d'une solution aqueuse

concentrée et portait le tout au reflux en agitant vigoureusement afin d'éliminer toute trace d'eau du milieu réactionnel. Lorsqu'il ne passait plus d'eau en tête du réacteur, on portait progressivement la température du milieu réactionnel à 150° C par concentration de la solution.

On introduisait alors dans le réacteur 215,25 g (0,75 mole) de bis (chloro-4 phényl) sulfone en solution dans un mélange de 250 ml de diméthylsulfoxyde et de 100 ml de toluène à 100° C, puis on maintenait le milieu réactionnel à 150° C pendant 3 heures et le refroidissait ensuite à 60° C.

On ajoutait alors instantanément au milieu réactionnel 552 g (6 moles) d'épichlorhydrine, la température du milieu s'élevant jusqu'à 70° C environ par suite de l'exothermie de la réaciton, et maintenait ledit milieu à cette température pendant environ 1,5 heure. On ajoutait alors 1,5 l de méthyl isobutylcétone dans le réacteur puis lavait le milieu réactionnel par 6 fractions d'un litre et demi d'eau.

La méthylisobutylcétone était ensuite éliminée par distillation et le produit restant constitué par la résine époxyde formée était séché à 150° C sous une pression réduite d'environ 600 Pa pendant 15 minutes avant d'être coulée.

On recueillait 540 g d'une résine époxyde ayant un point de ramollissement de 60-65° C et renfermant 2,2 à 2,4 équivalents époxy par kg. Le taux de chlore de cette résine était inférieur à 0,5 % en poids.

<u>Essai B : Résine dérivée du bis (hydroxy-4phényl) sulfure</u>

Dans un réacteur analogue à celui utilisé dans l'essai A et renfermant 0,5 l de diméthylsulfoxyde (DMSO en abrégé) et 160 ml de toluène à 60° C, on dissolvait 109 g (0,5 mole) de bis (hydroxy-4 phényl) sulfure puis ajoutait 40 g (1 mole) de NaOH à la solution obtenue.

Après élimination de l'eau et concentration de la solution comme indiqué à l'essai A, on introduisait dans le réacteur 75,75 g (0,25 mole) de bis (chloro-4 phényl) sulfone en solution dans un mélange DMSO/toluène dans un rapport volumique égal à 2,5 : l, puis on maintenait le milieu réactionnel à 155° C pendant 3 heures et le refroidissait ensuite à 60° C.

On ajoutait alors instantanément au milieu réactionnel 185 g (2 moles) d'épichlorhydrine et maintenait alors ledit milieu à 60-70° C pendant 1,5 heure.

Après traitement du milieu réactionnel comme indiqué dans l'essai A, on recueillait 176,5 g d'une résine époxyde ayant un point de ramollissement de 55° C et présentant un équivalent d'époxy égal à 2,3 époxy par kg. Le taux de chlore de cette résine était inférieur à 1,4 % en poids.

<u>Essai C : Résine dérivée du résorcinol</u>

Dans un réacteur analogue à celui utilisé dans l'essai A et renfermant 0,2 l de DMSO et 0,2 l de toluène à 60° C, on dissolvait 27,5 g (0,25 mole) de résorcinol puis ajoutait 20 g (0,5 mole) de soude à la solution obtenue.

Après élimination de l'eau et concentration de la solution comme indiqué à l'essai A, on introduisait dans le réacteur 35,87 g (0,125 mole) de bis (chloro-4 phényl) sulfone dans un mélange DMSO/toluène dans un rapport volumique égal à 2,5 : 1, puis on maintenait le milieu réactionnel à 150° C pendant 3 heures et le refroidissait ensuite à 60° C.

On ajoutait alors rapidement au milieu réactionnel 95 g (1 mole) d'épichlorhydrine et maintenait ledit milieu à 70° C pendant 2 heures.

Après traitement du milieu réactionnel comme indiqué à l'essai A, on recueillait 62,8 g d'une résine époxyde ayant un point de ramollissement de 39-40° C et un équivalent d'époxy égal à 3,2-3,3 époxy par kg.

<u>Essai D : Résine dérivée du bis (hydroxy-4 phényle)</u>

Dans un réacteur analogue à celui utilisé dans l'essai A et renfermant 0,25 l de DMSO et 0,15 l de toluène à 60° C, on dissolvait 46,5 g (0,25 mole) de bis (hydroxy-4 phényle), c'est-à-dire de dihydroxy-4,4' biphényle, puis ajoutait 20 g (0,5 mole) de soude à la solution obtenue.

Après élimination de l'eau et concentration de la solution comme indiqué à l'essai A, on introduisait dans le réacteur 35,87 g (0,125 mole) de bis (chloro-4 phényl) sulfone dans un mélange DMSO/toluène dans un rapport volumique égal à 2,5 : 1, puis on maintenait le milieu réactionnel à 150° C pendant 3 heures et le refroidissait ensuite à 60° C.

On ajoutait alors rapidement au milieu réactionnel 140 g (1,5 mole) d'épichlorhydrine et maintenait ledit milieu à 65° C pendant 2 heures.

Le milieu réactionnel était alors repris par 0,5 l de chloroforme et la phase chloroformique était lavée

trois fois par 0,5 l d'eau à 60° C puis reprécipitée dans l'éthanol, en utilisant 3 volumes d'éthanol par volume de solution. On obtenait un précipité blanc floconneux, que l'on récupérait par filtration, lavage et séchage.

On recueillait 78 g d'une résine époxyde fondant vers 168-170° C et ayant un équivalent d'époxy égal à 2,2 epoxy par kg.

Essai E: Résine dérivée du bis (hydroxy-4 phényle)-2,2 propane de masse moléculaire intermédiaire

Dans un réacteur analogue à celui utilisé dans l'essai A et renfermant 1,4 l de DMSO et 0,7 l de toluène à 60° C, on dissolvait 228,2 g (1 mole) de bisphénol A, puis ajoutait 80 g (2 moles) de soude à la solution obtenue.

Après élimination de l'eau et concentration de la solution comme indiqué dans l'essai A, on introduisait dans le réacteur 215,25 g (0,75 mole) de bis (chloro-4 phényl) sulfone en solution dans un mélange DMSO/toluène dans un rapport volumique égal à 2,5 : 1, ledit mélange ayant une température de 100° C, puis on maintenait le milieu réactionnel à 155° C pendant 3 heures et le refroidissait ensuite à 60° C.

On ajoutait alors rapidement au milieu réactionnel 550 g d'épichlorhydrine et maintenait ledit milieu à 65° C pendant 2 heures, puis on évaporait à 65° C, sous pression réduite, environ 0,65 l de liquide.

La solution obtenue après évaporation était reprécipitée dans dix fois son volume d'eau et le précipité obtenu était récupéré par filtration, puis lavé et séché.

On recueillait 320 g d'une résine époxyde solide se ramollissant vers 102° C et présentant un équivalent d'époxy correspondant à 1,2 époxy par kg.

Essai F : Résine dérivée du bis (hydroxy-4 phényl) -2,2 propane ayant une masse moléculaire élevée

Dans un réacteur analogue à celui utilisé dans l'essai A et renfermant 1 l de DMSO et 0,8 l de toluène à 60° C, on dissolvait 228,2 g de bisphénol A, puis ajoutait 80 g de NaOH à la solution obtenue.

Après élimination de l'eau et concentration de la solution comme indiqué dans l'essai A, on introduisait dans le réacteur 280 g (0,95 mole) de bis (chloro-4 phényl) sulfone en solution dans un mélange DMSO/toluène dans un rapport volumique égal à 2,5 :1, ledit mélange ayant une température de 100° C, puis on maintenait le milieu réactionnel à 155° C pendant 3 heures et le refroidissait ensuite à 60° C.

On ajoutait alors rapidement au milieu réactionnel 50 g d'épichlorhydrine et maintenait ledit milieu à environ 65° C pendant 1,5 heure.

La solution réactionnelle était alors refroidie et précipitée goutte à goutte dans une solution eau/éthanol agitée violemment dans un broyeur à couteaux. On récupérait le précipité obtenu par filtration, lavage à l'éthanol puis séchage.

On recueillait ainsi 108,5 g d'une résine époxyde de point de ramollissement égal à 230° C, ladite résine présentant un équivalent d'époxy correspondant à 0,05 époxy par kg et une teneur en chlore inférieur à 0,1 % en poids.

EXEMPLE 2 :

Préparation d'une résine époxyde à groupements sulfones de formule II dérivée du bis (hydroxy-4 phényl)-2,2 propane

On opérait dans les mêmes conditions que celles utilisées pour mettre en oeuvre l'essai A de l'exemple 1, avec toutefois introduction goutte à goutte de l'épichlorhydrine sur une période de 40 minutes environ.

On recueillait 480 g de résine époxyde ayant un point de ramollissement de 100° C environ et présentant un équivalent d'époxy correspondant à 1,1 à 1, 4 époxy par kg et un taux de chlore inférieur à 0,5 % en poids;

EXEMPLE 3 :

Préparation d'une résine époxyde à groupements sulfone de formule III dérivée du bis (hydroxy-4 phényl)-2,2 propane

On opérait dans un réacteur à double enveloppe muni d'un agitateur à ancre et d'une prise de vide.

Dans le réacteur on introduisait 190 g d'un diglycidyléther de bisphénol A commercial ayant un équivalent d'époxy égal à 200 ainsi que 75 g de bis (hydroxy-4 phényl) sulfone. Le contenu du réacteur

était alors porté progressivement à 100 °C sous agitation, puis on lui ajoutait 13 mg d'une solution aqueuse de NaOH à 30 % en poids. Le milieu réactionnel était alors porté progressivement à 160 °C, puis maintenu à cette température, sous un vide d'environ 600 Pa, pendant 3 heures.

On recueillait 250 g d'une résine époxyde ayant un point de ramollissement d'environ 75-80 °C et un équivalent d'époxy de 1,42 époxy par kg.

EXEMPLE 4 :

Propriétés de résines époxydes incluant une résine époxyde à groupements sulfones de formule I

On déterminait aux fins de comparaison les propriétés mécaniques (résistance à la traction $\sigma$ r et allongement à la rupture en traction $\epsilon$ r) et la reprise en eau (mesurée après 48 heures dans l'eau bouillante et exprimée en % en poids) de résines époxydes incluant une résine époxyde à groupements sulfones de formule I (essais I et III) et de résines époxydes commerciales (essais II et IV).

Les essais étaient réalisés en suivant la procédure définie ci-après :

On dissolvait à 130 °C une certaine quantité d'un durcisseur de résine époxyde, à savoir le bis (amino-4 phényl) sulfone (en abrégé DDS) dans 100 parties en poids de résine époxyde. Après dissolution du durcisseur, on versait la formulation résultante dans un moule en acier inoxydable (dimensions : 300 x 400 x 3mm) réalisé en deux parties et préchauffé à 120 °C. Le moule était alors mis à l'étuve et chauffé pendant 2 h à 120 °C puis pendant 6 h à 185 °C et ensuite refroidi lentement à l'ambiante. Après démoulage, on obtenait une plaque durcie de résine dans laquelle on usinait les éprouvettes nécessaires à la détermination des propriétés précitées.

Les formulations de résine époxyde utilisées dans les divers essais étaient les suivantes :

- Essai I: formulation renfermant en poids, 60 parties d'une résine époxyde du type tétraglycidyléther de méthylène dianiline, commercialisée sous le nom LOPOX® B 3302, 40 parties de la résine à groupements sulfones préparée dans l'essai A de l'exemple 1 et 22 parties de DDS.
- . Essai II: formulation renfermant 100 parties en poids de la, résine époxyde commerciale LOPOX® B 3302 et 30 parties en poids de DDS.
- . Essai III: formulation renfermant, en poids, 60 parties d'une résine époxyde du type tétraglycidyléther de méthylène dianiline, commercialisée sous le nom MY 720, 40 parties de la résine à groupements sulfones préparée dans l'essai E de l'exemple 1 et 20 parties de DDS.
- . Essai IV : formulation renfermant, en poids, 100 parties de la résine époxyde commerciale MY 720 et 30 parties de DDS.

Les résultats obtenus au cours des essais I à IV sont rassemblés dans le tableau I ci-après.

Tableau I

| Essai | Propriétés mécaniques | | Reprise en eau (% en poids) |
|---|---|---|---|
| | $\sigma$r (Mpa) | $\epsilon$r (%) | |
| I | 74 | 2,6 | 2,2 |
| II | 64 | 1,9 | 3,2 |
| III | | | 2,2 |
| IV | | | 3 |

EXEMPLE 5 :

Propriétés de résines époxydes incluant une résine époxyde à groupements sulfones de formule II

On déterminait aux fins de comparaison certaines caractéristiques mécaniques (résistance au choc, amortissement maximal, chute normalisée du module de traction entre 25 et 160 °C) et la reprise en eau de résines époxydes incluant une résine époxyde à groupements sulfones de formule II (essais V et VII) et de résines époxydes commerciales (essais VI et VIII).

Les éprouvettes nécessaires à la détermination des caractéristiques précitées étaient préparées à partir des résines durcies obtenues comme décrit dans l'exemple 4.

Les formulations de résine époxyde utilisées dans les divers essais étaient les suivantes :

- Essai V : formulation renfermant, en poids, 62 parties de la résine époxyde commerciale LOPOX® B 3302, 38 parties de la résine à groupements sulfones préparée dans l'exemple 2 et 22 parties de DDS.
- Essai VI : formulation renfermant 100 parties en poids de la résine époxyde commerciale LOPOX® B 3302 et 30 parties en poids de DDS.
- Essai VII : formulation renfermant, en poids, 62 parties de la résine époxyde commerciale MY 720, 38 parties de la résine à groupements sulfones préparée dans l'exemple 2 et 20 parties de DDS.
- Essai VIII: formulation renfermant, en poids, 100 parties de la résine commerciale MY720 et 30 parties de DDS.

Les caractéristiques précitées sont déterminées comme suit :

- Reprise en eau : mesurée après 48 heures dans l'eau bouillante et exprimée en pourcentage pondéral.

. Résistance au choc : on opère à l'aide d'un appareil de choc instrumenté (marque CEAST) par la méthode dite des poids tombants et l'on note les énergies totales absorbées exprimées en Joules.

. Amortissement maximal et chute du module de traction entre 25 et 160 °C : déterminés par analyse mécanique dynamique effectuée en faisant appel à l'appareil DMA 982 de DU PONT.

Les résultats obtenus au cours des essais V à VIII sont consignés dans le tableau II.

Tableau II

| Essai | Résistance au choc (Joules) | Analyse mécanique dynamique | | Reprise en eau (%en poids) |
|---|---|---|---|---|
| | | Température d'amortissement maximal (°C) | Chute du module de traction (%) | |
| V | 2,15 | 217 | 22 | 2 |
| VI | 1,5 | 250 | 31 | 3,2 |
| VII | 2,65 | 220 | 21,5 | 1,8 |
| VIII | 1,3 | 253 | 33 | 3 |

EXEMPLE 6 :

Propriétés de résines époxydes incluant une résine époxyde à groupements sulfones de formule III

On déterminait aux fins de comparaison certaines caractéristique mécaniques (allongement à la rupture $\epsilon r$, chute du module de traction, amortissement maximal) et la reprise en eau d'une résine époxyde incluant une résine époxyde à groupements sulfones de formule III (essai IX) et d'une résine époxyde commerciale (essai X).

Les éprouvettes nécessaires à la détermination des caractéristiques précitées étaient préparées à partir de plaques des résines durcies obtenues comme indiqué dans l'exemple 4.

Les formulations de résine époxyde utilisées dans les essais étaient les suivantes :

. Essai IX : formulation renfermant, en poids, 60 parties de la résine époxyde commerciale MY 720, 40 parties de la résine époxyde à groupements sulfones préparée dans l'exemple 3 et 22 parties de DDS.

. Essai X : formulation renfermant 100 parties en poids de la résine époxyde commerciale MY 720 et 30 parties de DDS.

Les résultats obtenus au cours des essais sont rassemblés dans le tableau III.

Tableau III

| Essai | Allongement à la rupture εr (%) | Analyse mécanique dynamique | | Reprise en eau (% en poids) |
|---|---|---|---|---|
| | | Température d'amortissement maximal (°C) | Chute du module de traction (%) | |
| IX | 2,55 | 23 | 23,5 | 2,5 |
| X | 1,55 | 253 | 33 | 3 |

EXEMPLE 7 :

Amélioration des propriétés de composites tissu de carbone/résine époxyde préparés à partir de compositions renforcées suivant l'invention

On préparait des plaques composites à partir de compositions résultant de l'association d'un renfort en tissu de carbone et de formulations de résine époxyde obtenues soit à partir de résines époxydes renfermant des groupements sulfones ou de résines époxydes commerciales, lesdites compositions se présentant sous la forme de préimprégnés et l'on déterminait ensuite les principales caractéristiques mécaniques desdites plaques.

Le tissu de carbone utilisé comme renfort consistait en un tissu de carbone équilibré présentant une masse surfacique de 285 g/$m^2$ et obtenu à partir d'une fibre de carbone ayant une résistance à la traction de 3500 MPa et un allongement à la rupture d'environ 1,5 %.

Les formulations de résine époxyde employées pour la production des plaques composites étaient les suivantes :

- Essai 7.1. : formulation suivant l'invention renfermant, en poids, 60° parties de la résine époxyde commerciale LOPOX® B 3302, 40 parties de la résine époxyde à groupements sulfones préparée dans l'essai A de l'exemple 1 et 22 parties de DDS.
- Essai 7.2 : formulation suivant l'invention renfermant, en poids, 60 parties de la résine LOPOX® B 3302, 40 parties de la résine à groupements sulfones préparée dans l'exemple 2 et 22 parties de DDS.
- Essai 7.3: formulation témoin renfermant, en poids, 100 parties de résine LOPOX® B 3302 et 30 parties de DDS.
- Essai 7.4: formulation suivant l'invention renfermant, en poids, 62 parties de la résine époxyde commerciale MY720, 38 parties de la résine à groupements sulfones de l'exemple 2 et 22 parties de DDS.
- Essai 7.5: formulation suivant l'invention renfermant, en poids, 60 parties de la résine MY 720, 40 parties de la résine à groupements sulfones préparée dans l'essai A de l'exemple 1 et 22 parties de DDS.
- Essai 7.6: formulation témoin renfermant, en poids, 100 parties de résine époxyde MY 720 et 30 parties de DDS.

Fabrication des préimprégnés :

On préparait une solution de la formulation de résine époxyde choisie dans la méthyléthylcétone, à température ordinaire, à raison de 90 g de formulation pour 100 g de solvant.

On imprégnait des pièces de 30 x 40 cm du tissu de carbone à l'aide de la solution ainsi obtenue en les immergeant dans ladite solution.

Les pièces de tissu de carbone ainsi imprégnées, dites préimprégnés, étaient ensuite séchées pendant 20 à 30 minutes dans un tunnel à air chaud réglé à une température de 60-100°C, puis mises sous vide afin d'éliminer la majeure partie du solvant utilisé;

On obtenait des préimprégnés contenant environ 40 % en poids de résine et dont le taux de produits volatils après séchage était de 1 à 2 %.

Fabrication des plaques composites :

On formait une plaque en empilant 7 plis du préimprégné et en moulant ladite plaque à l'autoclave en utilisant le schéma de cuisson suivant :

- montée de 25° C à 135° C à raison de 2° C/minute
- palier de 60 minutes à 135° C
- montée de 135° C à 180° C à raison de 2° C/minute
- palier de 2 h à 180° C
- redescente à température ordinaire à raison de 1 ° C/minute.

Après 120 minutes, c'est-à-dire un peu avant la fin du palier intermédiaire à 135° C, on appliquait une pression de 6 bars destinée à rendre compacte la plaque composite.

On obtenait des plaques composites carbone/époxyde dont l'épaisseur moyenne était égale à 1,85 mm (à 2,5 % près) et le taux volumique de fibres représentait 64,2 % (à 1,5 % près). Le taux de vide variait pour l'ensemble des plaques produites entre 1,3 et 2,8 %.

Caractéristiques mécaniques déterminées sur les plaques composites :

- Température d'amortissement maximal et chute du module de traction entre 25° C et 160° C :

Déterminées par analyse mécanique dynamique en faisant appel à l'appareil DMA 982 de DU PONT.

- Caractéristiques de flexion:

Représentées par le module de flexion et la résistance à la flexion qui sont déterminés suivant la norme française AFNOR L 17411

- Cisaillement interlaminaire :

Déterminé suivant la norme française AFNOR L 17412

- Caractéristiques de résistance au choc :

Représentées par la force d'arrêt maximale au moment du choc et par l'énergie totale absorbée au cours du choc, qui sont déterminées par un essai de choc instrumenté selon la méthode dite des poids tombants en faisant appel à l'appareil de marque CEAST.

Cet appareil, qui comporte un percuteur susceptible de tomber en chute libre depuis une certaine hauteur sur une éprouvette du matériau à étudier, est utilisé dans les conditions suivantes :

- Masse du percuteur : 5,14 kg
- Diamètre du percuteur : 12,7 mm
- Hauteur de chute : 1,5 m
- Vitesse au début de l'impact : 5,4 m/s
- Energie disponible : 75 Joules

Les valeurs données comme mesures de la force d'arrêt maximale au moment du choc et de l'énergie absorbée sont des moyennes sur cinq échantillons.

Les résultats des diverses déterminations sont rassemblés dans le tableau IV.

Tableau IV

| Essai | Analyse mécanique dynamique | | Flexion | | Cisaillement | Choc | |
|---|---|---|---|---|---|---|---|
| | Température d'amortissement maximal (°C) | Chute du module de traction (%) | Module de flexion (GPa) | Résistance à la flexion (MPa) | interlaminaire (MPa) | Force d'arrêt maximale (daN) | Energie totale absorbée (Joules) |
| 7.1 | 231 | 1,8 | 54,8 | 823 | 55,2 | 186 | 8 |
| 7.2 | 234 | 4,5 | 51,2 | 785 | 73,4 | 170 | 8,8 |
| 7.3 | 270 | 2,3 | 48,5 | 623 | 60 | 164 | 7,2 |
| 7.4 | 246 | 2,3 | 56 | 836 | 69,3 | 166 | 8,1 |
| 7.5 | | | 50,1 | 736 | 66,7 | 169 | 8,15 |
| 7.6 | 272 | 2,9 | 53,2 | 653 | 69,1 | 141 | 6,4 |

La comparaison des résultats figurant au tableau IV fait apparaître, entre autres, une augmentation sensible de la résistance à la flexion et de la résistance au choc (énergie totale absorbée plus importante) pour les plaques obtenues suivant l'invention (essais 7.1, 7.2, 7.4 et 7.5) par rapport aux plaques témoins (essais 7.3 et 7.6) sans perte conséquente sur les autres propriétés et même fréquemment avec une amélioration de ces dernières.

EXEMPLE 8 :

Influence de la proportion de résine époxyde à groupements sulfones dans la formulation sur les propriétés des composites produits.

En opérant comme décrit dans l'exemple 7, on préparait des plaques composites à partir de formulations de résine époxyde renfermant des teneurs croissantes en résine à groupements sulfones.

Les compositions des formulations étudiées sont données en partie en poids dans le tableau V.

Tableau V

| Essai | 8.1 | 8.2 | 8.3 | 8.4 | 8.5 |
|---|---|---|---|---|---|
| Lopox® B3302 | 100 | 72 | 65 | 35 | 30 |
| DGEBA *) | | | | 15 | 15 |
| Résine de l'essai A de l'exemple 1 | | 28**) | | 20**) | 55 |
| Résine de l'exemple 2 | | | 35**) | 30 | |
| DDS | 30 | 27,2 | 28,4 | 20,5 | 21,5 |

*) DGEBA = résine diglycidyléther de bisphénol A liquide utilisée pour abaisser la viscosité du mélange

**) La résine considérée a été mise en réaction avec le durcisseur utilisé (DDS) pendant 3 h à 180 °C et le produit résultant incorporé au reste de la formulation.

Les caractéristiques mécaniques des plaques composites, correspondant aux caractéristiques définies dans l'exemple 7, ont été déterminées et les résultats obtenus figurent au tableau VI.

Tableau VI

| Essai | Analyse mécanique dynamique | | Flexion | | Cisaillement | Choc | |
|---|---|---|---|---|---|---|---|
| | Température d'amortissement maximal (°C) | Chute du module de traction (%) | Module de flexion (GPa) | Résistance à la flexion (MPa) | interlaminaire (MPa) | Force d'arrêt maximale (daN) | Energie totale absorbée (Joules) |
| 8.1 | 270 | 2,3 | 48,5 | 623 | 60 | 164 | 7,2 |
| 8.2 | | | 47,6 | 757 | 64,6 | 158 | 7,5 |
| 8.3 | | | 52 | 845 | 71,4 | 185 | 8,7 |
| 8.4 | 216 | 1,6 | 53,7 | 917 | 62,1 | 176 | 9,1 |
| 8.5 | 217 | 2,3 | 55,9 | 875 | 65,9 | 186 | 8,92 |

L'examen des résultats présentés dans le tableau VI fait ressortir une amélioration, pour des teneurs croissantes en résine époxyde à groupements sulfones, d'une part des propriétés en flexion avec un gain de 10 % environ sur le module mais de près de 50 % sur la résistance en flexion pour la meilleure plaque et d'autre part de la tenue au choc destructif avec un gain de 27 % pour la meilleure plaque.

On voit par ailleurs que le cisaillement interlaminaire reste dans tous les cas supérieur à celui du

témoin (essai 8.1) et que la tenue thermique reste bonne malgré la baisse habituelle sur la température d'amortissement maximal en analyse mécanique dynamique. Le cisaillement interlaminaire de la plaque de l'essai 8.5 est encore de 48,4 MPa à 120 °C.

EXEMPLE 9 :

Propriétés comparées au niveau des matériaux composites des résines époxydes à groupements sulfones des exemples 1 à 3.

En opérant comme décrit dans l'exemple 7, on préparait des plaques composites à partir de formulations de résine époxyde renfermant l'une des résines époxydes préparées dans les exemple 1 à 3.

Les compositions des formulations étudiées sont données en parties en poids dans le tableau VII, ces formulations incluant toutes 30 parties en poids d'une résine époxyde DGEBA conventionnelle (résine diglycidyléther de bisphénol A) pour augmenter leur pégosité, c'est-à-dire leur caractère collant. Cette qualité est recherchée pour ce type de produits car elle permet un positionnement aisé des plis du préimprégné les uns par rapport aux autres.

Tableau VII

| Essai | 9.1 | 9.2 | 9.3 | 9.4 |
|---|---|---|---|---|
| Lopox B3302 | 70 | 30 | 30 | 30 |
| DGEBA | 30 | 30 | 30 | 30 |
| Résine de l'essai A de l'exemple 1 | | 40 | | |
| Résine de l'exemple 2 | | | 40 | |
| Résine de l'exemple 3 | | | | 40 |
| DDS | 30 | 22 | 22 | 22 |

Les caractéristiques mécaniques des plaques composites, correspondant aux caractéristiques définies dans l'exemple 7, ont été déterminées et les résultats obtenus figurent au tableau VIII.

La comparaison des résultats présentés au tableau VIII fait ressortir une amélioration de la résistance au choc apportée par la présence dans la formulation d'une résine époxyde à groupements sulfones ayant l'une ou l'autre des formules I, II ou III définies précédemment (essais 9.2 à 9.4) par rapport à la formulation témoin (essai 9.1).

Tableau VIII

| Essai | Analyse mécanique dynamique | | Flexion | | Cisaillement | Choc | |
|---|---|---|---|---|---|---|---|
| | Température d'amortissement maximal (°C) | Chute du module de traction (%) | Module de flexion (GPa) | Résistance à la flexion (MPa) | interlaminaire (MPa) | Force d'arrêt maximale (daN) | Energie totale absorbée (Joules) |
| 9.1 *) | | | 54,3 | 778 | 66,2 | 165 | 7,1 |
| 9.2 | 210 | 1,5 | 56,7 | 773 | 59,2 | 176 | 8,4 |
| 9.3 | 220 | 2 | 52,6 | 804 | 66,3 | 189 | 8,9 |
| 9.4 | 213 | 2,1 | 57,9 | 865 | 56,6 | 161 | 7,9 |

*) Essai témoin

EXEMPLE 10 :

Amélioration des propriétés d'un composite à support nappes unidirectionnelles croisées par utilisation de résine époxyde à groupements sulfones :

On préparait des plaques composites à partir de nappes de carbone unidirectionnelles préimprégnées de résine époxyde par enduction à l'état fondu.

La nappe unidirectionnelle était réalisée par alignement de 64 fibres de carbone 6K mises côte à côte sur une largeur de 20 cm. La fibre de carbone utilisée avait les mêmes caractéristiques que celle constituant le tissu de carbone employé dans l'exemple 7 et le grammage de la nappe ainsi réalisée avant dépôt de résine était approximativement de 120 g/m². La nappe était imprégnée par la formulation de résine choisie, à l'état fondu, en opérant sur une machine pilote de préimprégnation par enduction à l'état fondu.

Les formulations de résine étudiées étaient les suivantes :

- Essai 10.1 : formulation suivant l'invention renfermant, en poids, 30 parties de LOPOX® B 3302, 30 parties de résine DGEBA (comme dans l'exemple 9), 40 parties de la résine à groupements sulfones décrite dans l'essai A de l'exemple 1 et 22 parties de DDS.
- Essai 10.2 : formulation témoin renfermant, en poids, 100 parties de LOPOX® B 3302 et 30 parties de DDS

On formait ensuite deux plaques en empilant 16 plis, croisés alternativement à 0° et 90°, du préimprégné obtenu comme indiqué ci-dessus, puis moulait à l'autoclave les plaques obtenues en faisant appel à un schéma de cuisson identique à celui utilisé dans l'exemple 7.

Les plaques obtenues présentaient une épaisseur de 1,7 mm et renfermaient 64 % de fibres de carbone.

Sur ces plaques composites on déterminait les caractéristiques mécaniques de flexion, de cisaillement interlaminaire et de choc comme indiqué précédemment.

Les résultats de ces déterminations sont consignés dans le tableau IX.

Tableau IX

| Essai | Flexion | | Cisaillement | Choc | |
|---|---|---|---|---|---|
| | Module de flexion (GPa) | Résistance à la flexion (MPa) | interlaminaire (MPa) | Force d'arrêt maximale (daN) | Energie totale absorbée (Joules) |
| 10.1 | 57,5 | 996 | 62,5 | 210 | 8,25 |
| 10.2 | 58 | 916 | 50,8 | 165 | 6,4 |

La comparaison des résultats du tableau IX fait apparaître une amélioration d'environ 10 % sur la résistance en flexion, de 25 % environ sur le cisaillemnet interlaminaire et de près de 30 % sur la résistance au choc pour la plaque composite suivant l'invention (essai 10.1) par rapport à la plaque composite témoin (essai 10.2).

De plus, l'énergie absorbée au moment où la force d'arrêt est maximale (moment où la plaque se rompt) est en moyenne de 1,2 Joule pour le témoin contre 3,37 Joules pour la plaque suivant l'invention, ce

qui représente un gain de 280 %.

EXEMPLE 11 :

Amélioration de la résistance au vieillissement humide et de la tenue en fatigue des composites à renfort tissu de carbone en utilisant une composition suivant l'invention .

On préparait deux séries de plaques composites en utilisant la technique décrite à l'exemple 7, lesdites plaques étant constituées de 8 plis de tissu préimprégné au lieu de 7 et présentant une épaisseur de 2,1 mm à 5 % près.

La matrice d'une série de plaques était obtenue à partir d'une résine renfermant des groupements sulfones tandis que la matrice de l'autre série de plaques était formée à partir d'une résine époxyde commerciale, comme indiqué ci-après :

- Essai 11.1 : formulation suivant l'invention renfermant, en poids, 60 parties de la résine commerciale MY 720, 4 parties de résine commercialisée sous le nom LOPOX® 200, 36 parties de la résine époxyde à groupements sulfones décrite dans l'exemple 2 et 22 parties de DDS.
- Essai 11.2 : formulation témoin commercialisée sous le nom de formulation NARMCO® 5208.

Sur les plaques composites obtenues, qui renfermaient 64 à 65 % en volume de fibres de carbone, on déterminait les caractéristiques de flexion et le cisaillement interlaminaire à 20° C et 80° C.

Les résultats obtenus sont rassemblés dans le tableau X.

Tableau X

| Essai | Flexion | | | | Cisaillement interlaminaire ( MPa) | |
|---|---|---|---|---|---|---|
| | Module de flexion (GPa) | | Résistance à la flexion (MPa) | | | |
| | 20° C | 80° C | 20° C | 80° C | 20° C | 80° C |
| 11.1 | 63 | 60 | 826 | 840 | 69 | 58 |
| 11.2 | 55 | 54 | 723 | 770 | 58 | 54 |

Sur les deux séries de plaques composites on effectuait des essais en flexion pure à angle de déformation imposé et suivait l'évolution de la résistance à la flexion en fonction du nombre de cycles de déformation.

La résistance à la flexion des plaques composites suivant l'invention (essai 11.1) décroissait depuis une valeur initiale de 740 MPa en passant par une valeur de 456 MPa
(38 % de chute par rapport à la valeur initiale) après $10^6$ cycles de déformation et par une valeur d'environ 400 MPa au bout de 2 500 000 cycles de déformation.

Pour les plaques composites témoins (essai 11.2), la résistance à la flexion décroissait depuis une valeur initiale de 720 MPa en passant par une valeur de 386 MPa
(48 % de chute par rapport à la valeur initiale) après $10^6$ cycles de déformation et par une valeur d'environ 400 MPa au bout de 540 000 cycles de déformation.

La résistance résiduelle à la flexion des plaques témoins restait, tout au long de l'opération, inférieure à celle des plaques suivant l'invention, l'écart (par exemple 70 MPa après $10^6$ cycles de déformation) augmentant avec le nombre de cycles de déformation.

Ceci indique que la résistance à la fatigue des plaques composites incluant une résine à groupements sulfones est sensiblement supérieure à celle des plaques témoins.

On a également étudié la résistance au vieillissement humide des deux types de plaques composites en suivant l'évolution dans le temps de la prise de poids des plaques composites après maintien dans l'eau à 70° C pendant un temps variable.

On a constaté que la quantité d'eau absorbée par les plaques composites obtenues suivant l'invention (essai 11.1) restait dans le temps inférieure à celle absorbée par les plaques composites témoins (essai 11.2). Par exemple, au bout de 500 heures, les plaques composites témoins absorbaient une quantité d'eau supérieure de 30 % à celle absorbée par les plaques composites suivant l'invention.

Ceci met en évidence que les matériaux composites obtenus à partir des compositions suivant l'invention ont une résistance améliorée au vieillissement humide par rapport aux composites obtenus à

partir de résines époxydes conventionnelles.

EXEMPLE 12 :

Amélioration des allongements à la rupture des composites obtenus à partir de composition suivant l'invention

On préparait des éprouvettes composites à partir de plaques composites préparées à partir de nappes préimprégnées unidirectionnelles comme décrit à l'exemple 10 (essais 10.1 et 10.2). Les plaques étaient formées par un empilement de huit plis, les fibres étant alternativement orientées à + 45° et - 45° par rapport à l'axe de l'éprouvette.

On préparait également des éprouvettes témoins de manière comparable à partir de deux préimprégnés du commerce, le premier dénommé NARMCO® 5208 et le second CIBA 914.

On déterminait l'allongement à la rupture des diverses éprouvettes en les soumettant à l'essai de cisaillement par traction, ledit cisaillement étant étroitement lié aux caractéristiques mécaniques de la matrice et, en particulier, à sa bonne adhésion aux fibres.

Les résultats obtenus sont présentés dans le tableau XI.

Tableau XI

| Essai | Origine des préimprégnés | Allongement à la rupture (%) |
|---|---|---|
| 12.1 | Essai 10.1 | 5,2 |
| 12.2 | Essai 10.2 (Témoin) | 5,2 |
| 12.3 | CIBA 914 | 3,9 |
| 12.4 | NARMCO 5208 | 2 |

La comparaison des résultats figurant au tableau XI fait ressortir la flexibilité supérieure des composites dont la matrice dérive d'une résine époxyde suivant l'invention (essai 12.1) par rapport aux composites ayant une matrice en résine époxyde conventionnelle (essais 12.2 à 12.4).

EXEMPLE 13 :

Préparation de composites à base d'une composition suivant l'invention comportant un renfort à fibres longues de carbone à grand allongement :

On préparait des plaques composites à partir de nappes préimprégnées unidirectionnelles en suivant un mode opératoire correspondant à celui décrit dans l'exemple 10 et en faisant appel aux deux formulations suivante de résine époxyde :

- RES : formulation suivant l'invention renfermant, en poids, 60 parties de résine MY720, 40 parties de la résine époxyde préparée dans l'essai A de l'exemple 1 et 22 parties de DDS.
- RE : formulation témoin renfermant, en poids, 100 parties de résine MY 720 et 30 parties de DDS.

Deux qualités de nappes unidirectionnelles étaient utilisées pour produire les préimprégnés, l'une formée à partir de fibres de carbone longues, appelées ci-après fibres S, identiques à celles composant le tissu de carbone employé comme renfort dans l'exemple 7 et l'autre formée à partir de fibres de carbone à grand allongement, dénommée ci-après fibres GA, ces dernières fibres ayant une résistance à la traction de 5000 MPa et un allongement à la rupture de 1,7 % environ.

A partir des préimprégnés on préparait tout d'abord des plaques éprouvettes unidirectionnelles de 1 mm d'épaisseur (8 plis de préimprégnés empilés) pour effectuer des essais de traction.

Les résultats obtenus sont rassemblés dans le tableau XII.

Tableau XII

| Essai | Fibres | | Formulation de résine | Traction | | |
|---|---|---|---|---|---|---|
| | Taux*) (%) | Type | | Module d'élasticité (GPa) | Résistance à la traction (MPa) | Allongement à la rupture (%) |
| 13.1 | 68 | S | RE | 136 | 1 530 | 1,1 |
| 13.2 | 68 | S | RES | 150 | 1 863 | 1,2 |
| 13.3 | 69 | GA | RES | 182 | 2 453 | 1,4 |

*) Taux : proportion volumique de fibres dans le composite.

La comparaison des résultats figurant au tableau XII fait ressortir que le couple fibres GA/formulation de résine suivant l'invention conduit à l'obtention de plaques composites (essai 13.3) dont les caractéristiques en traction sont supérieures à celles de plaques obtenues à partir du couple fibres S/formulation de résine suivant l'invention et sont considérablement améliorées par rapport à celles des plaques témoins (essai 13.1).

A partir des préimprégnés, on préparait également des plaques éprouvettes unidirectionnelles de 2 mm d'épaisseur (15 plis de préimprégnés empilés) pour effectuer des essais de flexion.

Les résultats obtenus sont consignés dans le tableau XIII.

Tableau XIII

| Essai | Fibres | | Formulation de résine | Cisaillement interlaminaire (MPa) | Flexion | |
|---|---|---|---|---|---|---|
| | Taux (%) | Type | | | Module de flexion (GPa) | Résistance à la flexion (MPa) |
| 13.4 | 67 | S | RE | 109 | 112 | 1 495 |
| 13.5 | 67 | S | RES | 91,2 | 102 | 1 496 |
| 13.6 | 69 | GA | RES | 89 | 135 | 1 682 |

Le passage des fibres S aux fibres GA permet d'améliorer le module (+ 30 %) et la résistance à la flexion (+ 10 %) sans chute sur le cisaillement interlaminaire.

A partir des préimprégnés, on préparait enfin des plaques éprouvettes de 2 mm d'épaisseur formées en empilant 16 plis de préimprégnés alternativement croisés à 0° et 90° pour réaliser des essais de choc instrumenté comme indiqué précédemment.

Les résultats obtenus sont rassemblés dans le tableau XIV.

Tableau XIV

| Essai | Fibres | | Formulation de résine | Choc | |
|---|---|---|---|---|---|
| | Taux (%) | Type | | Force d'arrêt maximale (daN) | Energie totale absorbée (Joules) |
| 13.7 | 67 | S | RES | 274 | 14 |
| 13.8 | 68 | GA | RES | 608 | 26,5 |

La comparaison des résultats du tableau XIV fait ressortir que les compositions résultant de l'association de fibres de carbone grand allongement (GA) aux formulations de résine époxyde suivant l'invention conduit à des matériaux composites ayant une résistance au choc remarquable. On observe des gains de + 220 % sur la force maximale d'arrêt et de + 90 % sur l'énergie totale absorbée par rapport aux valeurs trouvées pour des composites comparables à renfort fibres S (standard).

EXEMPLE 14 :

Evaluation de la ténacité des compositions selon l'invention

On préparait des plaques composites à partir de préimprégnés unidirectionnels obtenus comme indiqué ci-après et ayant le même type et le même taux de renfort.

- Essai 14.1 : préimprégné unidirectionnel selon l'invention obtenu comme décrit dans l'exemple 10, essai 10.1.
- Essai 14.2 : préimprégné unidirectionnel produit comme indiqué dans l'exemple 10 mais en utilisant une formulation de résine époxyde commercialisée sous le nom CIBA® 914.
- Essai 14.3 : Préimprégné unidirectionnel produit comme indiqué dans l'exemple 10 mais en faisant appel à une formulation de résine époxyde commercialisée sous le nom NARMCO® 5208.

Les plaques étaient formées en empilant 24 plis du préimprégné choisi à 0°. Dans les plaques ainsi réalisées on provoquait volontairement un défaut en intercalant une feuille mince de polytétrafluoroéthylène dans l'épaisseur de l'un des quatre côtés de la plaque, entre le douzième et le treizième plis, sur une profondeur de quelques centimètres.

Les plaques étaient alors moulées à l'autoclave en faisant appel à un schéma de cuisson identique à celui de l'exemple 7.

Après moulage on obtenait des plaques de 250 mm x 250 mm présentant, sur l'un de leurs côtés, une amorce de fissure et dans lesquelles on taillait des éprouvettes de dimensions 19 mm x 250 mm.

Après collage de renforts et de talons, ces éprouvettes étaient utilisées pour réaliser un essai de propagation de fissure interlaminaire dit "Double cantilever beam", en élargissant la fissure à l'aide d'une machine de traction. Cet essai caractérise la ténacité (Gic) de la résine époxyde utilisée, c'est-à-dire l'énergie qu'il est nécessaire de déployer pour faire apparaître dans la résine une fissure de surface unitaire. La résine est d'autant meilleure que cette énergie est élevée. Chaque éprouvette permet de déterminer une dizaine de valeurs de Gic et l'on opère sur cinq éprouvettes par plaque.

Dans le tableau XV ci-après, on donne pour chacun des essais 14.1 à 14.3, la valeur moyenne de Gic trouvée.

Tableau XV

| Essai | Gic ($J/m^2$) |
|---|---|
| 14.1 | 223 |
| 14.2 | 135 |
| 14.3 | 90 |

La comparaison des valeurs de Gic figurant au tableau XV met en évidence la ténacité supérieure de la composition selon l'invention (essai 14.1).

**Revendications**

1. Composition renforcée de résine époxyde précurseur de matériaux composites à renfort fibres de carbone, du type comportant une ou plusieurs résines époxydes polyfonctionnelles non durcies, un ou plusieurs durcisseurs ce résines époxydes choisis parmi les diamines aromatiques et le dicyandiamide et une matière fibreuse de renfort consistant au moins pour moitié en fibres de carbone et se caractérisant en ce qu'au moins l'une desdites résines époxydes renferme dans ses chaînes un ou plusieurs motifs divalents -Z- de formule

$$-\!\!\left[ O-A-(OX)p-O-R-SO_2-R-(OX)p \right]_n\!\!-$$

dans laquelle les symboles A et R, identiques ou différents, désignent des radicaux aromatiques divalents en C6 à C20, X représente le radical -CH2-CHOH-CH2-, p est égal à zéro ou 1 et n est un nombre allant de 1 à 500.

2. Composition suivant la revendication 1, caractérisée en ce que dans la formule définissant le motif -Z-, n est un nombre allant de 1 à 200.

3. Composition suivant la revendication 1 ou 2, caractérisée en ce que dans la formule définissant le motif -Z-, les symboles A et R, identiques ou différents, sont choisis parmi les restes aromatiques hydrocarbonés divalents mononucléaires en C6 à C20, les restes aromatiques divalents polynucléaires en C12 à C20 à noyaux enchaînés, les restes aromatiques divalents hydrocarbonés polynucléaire en C10 à C20 à noyaux condensés, les restes divalents aromatiques de formule -Ar-Y-Ar- dans laquelle -Ar- est un radical arylique divalent en C6 à C10 et -Y- représente -S-, -SO-, -SO2-, -O-, -CO-, et les radicaux issus de ces restes par substitution par un ou plusieurs atomes d'halogène, notamment chlore ou fluor, ou par un ou plusieurs radicaux alcoxy en C1 à C4.

4. Composition suivant l'une des revendications 1 à 3, caractérisée en ce qu'au moins l'une des résines époxydes à groupements sulfones répond à la formule (I) ci-après:

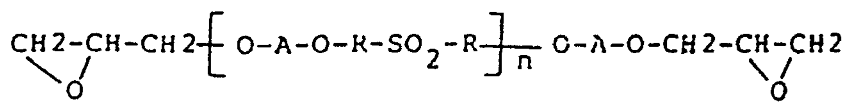

5. Composition suivant l'une des revendications 1 à 4, caractérisée en ce qu'au moins l'une des résines époxydes à groupements sulfones répond à la formule (II) ci-après :

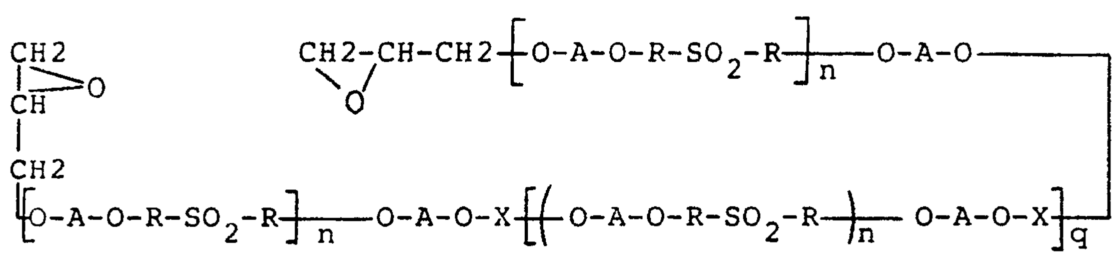

6. Composition suivant l'une des revendications 1 à 5, caractérisée en ce qu'au moins l'une des résines époxydes à groupements sulfones répond à la formule (III) ci-après:

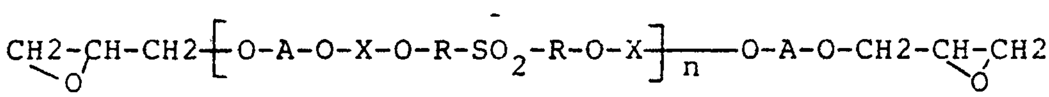

7. Composition suivant l'une des revendications 1 à 6, caractérisée en ce que les radicaux -A- présents dans les chaînes des résines époxydes à groupements sulfones sont choisis parmi les radicaux suivants :

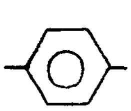 , 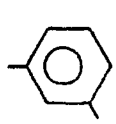 , 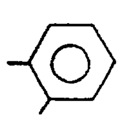 , 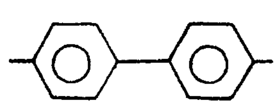 , 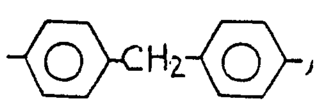 ,

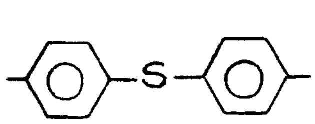 , 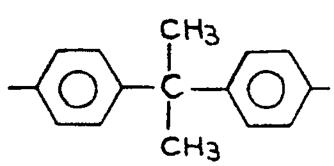 , 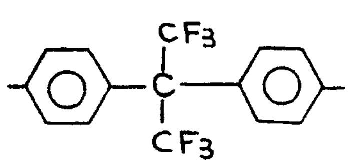 ,

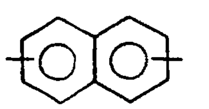 , 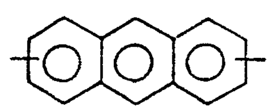

8. Composition suivant l'une des revendications 1 à 7, caractérisée en ce que le groupement $-R-SO_2-R$ des résines époxydes à groupements sulfones répond à la formule $-R_1-SO_2-R_1-$ dans laquelle $-R_1-$ désigne un reste hydrocarboné aromatique divalent mononucléaire en C6 à C10 éventuellement substitué par un ou plusieurs atomes d'halogène, notamment chlore ou fluor.

9. Composition suivant l'une des revendications 1 à 7, caractérisée en ce que le groupement $-R-SO_2-R-$ des résines époxydes à groupements sulfones répond à la formule

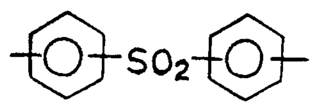

et de préférence à la formule

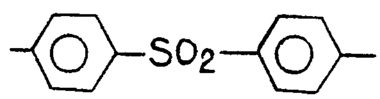

10. Composition suivant l'une des revendications 1 à 9, caractérisée en ce que les résines époxydes à groupements sulfones ont des masses moléculaires comprises entre 500 et 70 000 et de préférence entre 800 et 50 000.

11. Composition suivant l'une des revendications 1 à 10, caractérisée en ce que la quantité pondérale de résine époxyde à groupements sulfones qu'elle contient représente 5 à 100 % et de préférence 5 à 50 % de la quantité pondérale totale de résine époxyde de ladite composition.

12. Composition suivant l'une des revendications 1 à 11, caractérisée en ce qu'elle renferme une ou plusieurs résines époxydes conventionnelles en plus de la résine ou des résines époxydes à groupements sulfones, lesdites résines époxydes conventionnelles étant en particulier telles que diglycidyl éthers des bisphénols A ou F, époxyphénolnovolacs, époxycrésolnovolacs, tétraglycidyléthers de la méthylène diamine ou du tétraphényloléthane, triglycidyléthers du paraaminophénol ou du triphénylolméthane, époxyhydantoines, époxycyanurates, époxycycloaliphatiques.

13. Composition suivant la revendication 12, caractérisée en ce que la résine ou les résines époxydes conventionnelles ont des masses moléculaires comprises entre 500 et 70 000 et de préférence entre 800 et 50 000.

14. Composition suivant l'une des revendications 1 à 13, caractérisée en ce qu'elle renferme un ou plusieurs diluants réactifs, et en particulier un ou plusieurs composés tels que diglycidyléthers d'alcanediol, notamment diglycidyléther du butanediol, diglycidyl aniline ou toluidine, polyoxypropylènes époxydés, phtalate de glycidyle.

15. Composition suivant l'une des revendications 1 à 14, caractérisée en ce qu'elle renferme un ou plusieurs agents flexibilisants, en particulier choisis parmi les oligomères flexibles fonctionnalisés tels que caoutchoucs nitrile à terminaisons acides carboxyliques ou amines ou produits du type bismaléimides, bisnorbornényle imides ou biscyanates à squelette flexible ou parmi les polymères thermoplastiques de haute masse moléculaire compatibles avec les résines époxydes tels que polyéthersulfones, polyimides, terpolymères acrylonitrile/butadiène/styrène.

16. Composition suivant la revendication 15, caractérisée en ce que sa teneur en agent flexibilisant représente 5 à 50 % du poids de la composition.

17. Composition suivant l'une des revendications 1 à 16, caractérisée en ce qu'elle renferme moins de 30 % en poids d'un ou plusieurs monomères thermostables, notamment choisis parmi les bismaléimides et les bismaléimides triazines.

**18.** Composition suivant l'une des revendications 1 à 17, caractérisée en ce qu'elle renferme un durcisseur de résines époxydes consistant en bis(amino-4 phényl) sulfone.

**19.** Composition suivant l'une des revendications 1 à 18, caractérisée en ce que l'un au moins des durcisseurs présents dans la composition consiste en un produit de réaction d'un durcisseur de résine époxyde avec l'une des résines époxydes à groupements sulfones.

**20.** Composition suivant l'une des revendications 1 à 19, caractérisée en ce que la résine est déposée sur la matière fibreuse de renfort et notamment sur la matière de renfort à fibres longues pour former un préimprégné.

**21.** Composition suivant l'une des revendications 1 à 20, caractérisée en ce que la matière de renfort renferme, en volume, de 50 à 100% de fibres de carbone et de 50 à 0% de fibres d'un ou plusieurs autres types, par exemple fibres de polyamides aromatiques, fibres céramiques.

**22.** Composition suivant l'une des revendications 1 à 21, caractérisée en ce que la matière fibreuse de renfort se présente sous la forme de fils, torons, rubans, tissus ou nappes.

**23.** Composition suivant l'une des revendications 1 à 22, caractérisée en ce que la matière de renfort est à base de libres longues de carbone à grand allongement.

**24.** Composition suivant l'une des revendications 1 à 23, caractérisée en ce que le volume de la matière fibreuse de renfort représente 20 à 80 % et de préférence 40 à 70 % du volume occupé par la résine époxyde et la matière de renfort.

**25.** Matériaux composites à renfort fibreux et en particulier à renfort fibres longues obtenus en faisant appel à une composition de résine époxyde renforcée suivant l'une des revendications 18 à 24.

**26.** Matériaux composites suivant la revendication 25, caractérisés en ce que le renfort fibreux consiste essentiellement en fibres de carbone.

**27.** Matériaux composites suivant la revendication 25 ou 26, caractérisés en ce que la matière fibreuse de renfort se présente sous la forme de fils, torons, rubans, tissus ou nappes.

**28.** Matériaux composites suivant l'une des revendications 25 à 27, caractérisés en ce que la matière de renfort consiste en fibres longues de carbone et en particulier en fibres longues de carbone ayant un grand allongement.

**29.** Matériaux composites suivant l'une des revendications 25 à 29, caractérisés en ce que le volume de la matière fibreuse de renfort représente 20 à 80 % et de préférence 40 à 70 % du volume du matériau composite, c'est-à-dire du volume global occupé par la résine et la matière fibreuse de renfort.

**30.** Résines époxydes à groupements sulfones, caractérisés en ce qu'elles appartiennent au groupe des résines époxydes à groupements sulfones répondant aux formules (II) et (III) suivantes :

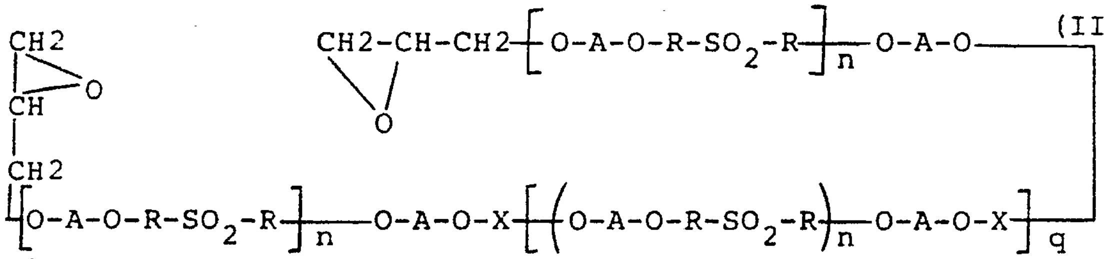

(II)

et

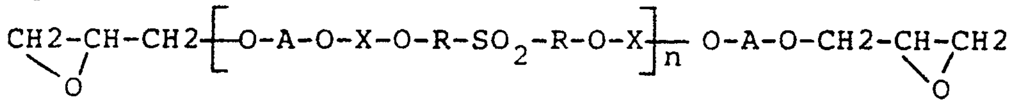

(III)

dans lesquelles les symboles A et R, identiques ou différents, désignent des radicaux aromatiques divalents en C6 à C20, X représente le radical -CH2-CHOH-CH2-, q est égal à zéro ou 1 et n est un nombre allant de 1 à 500 et de préférence de 1 à 200.

**31.** Résines suivant la revendication 30, caractérisées en ce que, dans la formule les définissant, les symboles A et R, identiques ou différents, sont choisis parmi les restes aromatiques hydrocarbonés divalents mononucléaires en C6 à C20, les restes aromatiques divalents polynucléaires en C12 à C20 à noyaux enchaînés, les restes aromatiques divalents hydrocarbonés polynucléaires en C10 à C20 à noyaux condensés, les restes aromatiques divalents de formule -Ar-Y-Ar- dans laquelle -Ar- est un radical arylique divalent en C6 à C10 et -Y- représente -S-, -SO-, -SO2-, -O-, -CO-, et les radicaux dérivant de tous ces restes par substitution par un ou plusieurs atomes d'halogène, notamment chlore ou fluor, ou par un ou plusieurs radicaux alcoxy en C1 à C4.

**32.** Résines suivant la revendication 30 ou 31, caractérisées en ce que les radicaux A sont choisis dans le groupe formé par les radicaux suivants :

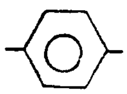 , 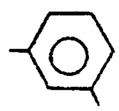 , 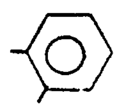 , 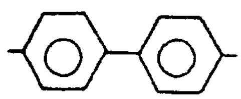 , 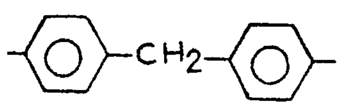 ,

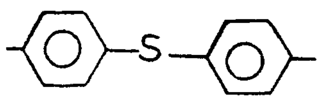 , 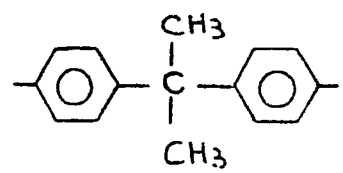 , 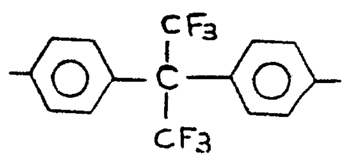 ,

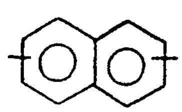 , 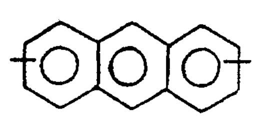

**33.** Résines suivant l'une des revendications 30 à 32, caractérisées en ce que le groupement $-R-SO_2-R-$ répond à la formule -R1-SO2-R1, dans laquelle -R1- désign un reste hydrocarboné aromatique divalent mononucléaire en C6 à C10 éventuellement substitué par un ou plusieurs atomes d'halogène, notamment chlore ou fluor.

**34.** Résines suivant l'une des revendications 30 à 32, caractérisées en ce que le groupement $-R-SO_2-R-$ répond à la formule

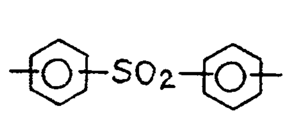

et de préférence à la formule

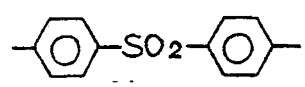

**35.** Résines suivant l'une des revendications 30 à 34, caractérisées en ce que leurs masses moléculaires sont comprises entre 500 et 70 000 et de préférence entre 800 et 50 000.

## Claims

**1.** Epoxy resin reinforced composition, which is a precursor of carbon fibre reinforced composites, of the type comprising one or more uncured polyfunctional epoxy resins, one or more epoxy resin hardeners

selected from among aromatic diamines and dicyandiamide, and a fibrous reinforcing material at least half of which consists of carbon fibres, and characterised in that at least one of the said epoxy resins contains in its chains one or more divalent units -Z- of the formula:

$$-\left[ O-A-(OX)_p-O-R-SO_2-R-(OX)_p \right]_n-$$

in which the symbols A and R, which are identical or different, designate C6 to C20 divalent aromatic radicals.
X represents the radical -CH2-CHOH-CH2-
p is equal to zero or 1 and n is a number from 1 to 500.

2. Composition according to claim 1, characterised in that in the formula defining the unit -Z-, n is a number from 1 to 200.

3. Composition according to claim 1 or 2, characterised in that in the formula defining the unit -Z- the symbols A and R, which are identical or different, are selected from among C6 to C20 mononuclear divalent hydrocarbon aromatic residues, C12 to C20 polynuclear divalent aromatic residues with interlinked rings, C10 to C20 polynuclear divalent hydrocarbon aromatic residues with fused rings, divalent aromatic residues of the formula -Ar-Y-Ar- in which -Ar- is a C6 to C10 divalent aryl radical and -Y- represents -S-, -SO-, -SO2-, -O-, -CO-, and radicals obtained from these residues by substitution with one or more halogen atoms, in particular chlorine or fluorine, or with one or more C1 to C4 alcoxy radicals.

4. Composition according to any one of claims 1 to 3, characterised in that at least one of the epoxy resins with sulphone groups corresponds to the following formula (I):

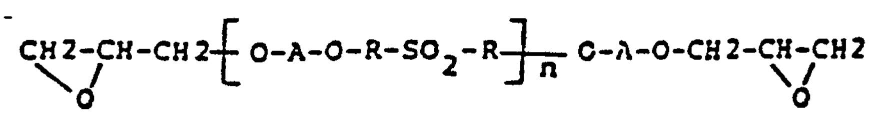

5. Composition according to any one of claims 1 to 4, characterised in that at least one of the epoxy resins with sulphone groups corresponds to the following formula (II):

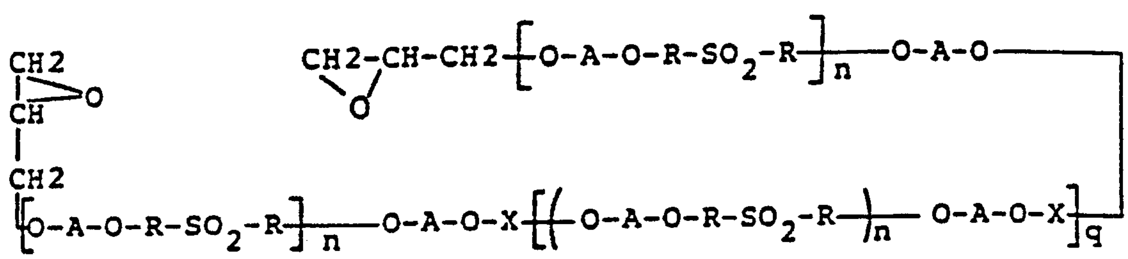

6. Composition according to any one of claims 1 to 5, characterised in that at least one of the epoxy resins with sulphone groups corresponds to the following formula (III):

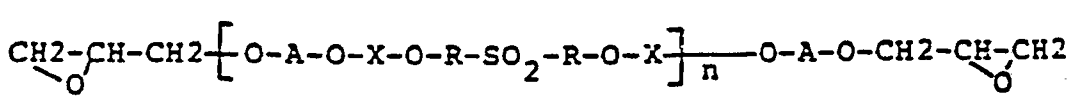

7. Composition according to any one of claims 1 to 6, characterised in that the -A- radicals present in the

epoxy resin chains with sulphone groups are selected from among the following radicals:

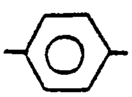 , 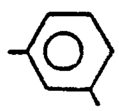 , 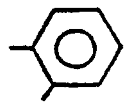 , 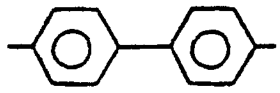 , 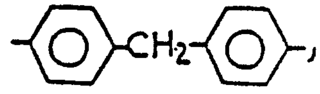 ,

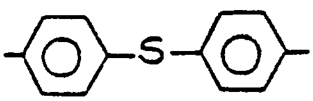 , 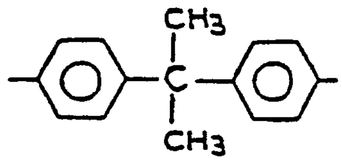 , 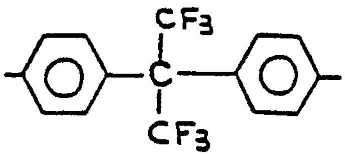 ,

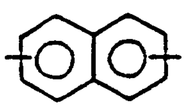 , 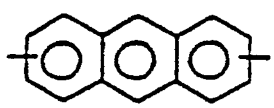

8. Composition according to any one of claims 1 to 7, characterised in that the group $-R-SO_2-R-$ of epoxy resins with sulphone groups corresponds to the formula $-R_1-SO_2-R_1-$ in which $-R_1-$ designates a C6 to C10 mononuclear divalent hydrocarbon aromatic residue which may be substituted by one or more halogen atoms, in particular chlorine or fluorine.

9. Composition according to any one of claims 1 to 7, characterised in that the group $-R-SO_2-R-$ of the epoxy resins with sulphone groups corresponds to the formula:

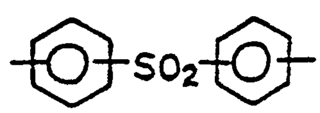

and preferably to the formula:

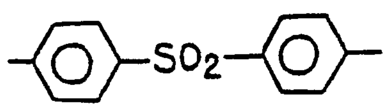

10. Composition according to any one of claims 1 to 9, characterised in that the epoxy resins with sulphone groups have a molecular weight of between 500 and 70 000, preferably of between 800 and 50 000.

11. Composition according to any one of claims 1 to 10, characterised in that the amount by weight of the epoxy resin with sulphone groups which it contains is between 5 and 100% and preferably between 5 and 50% of the total amount by weight of the epoxy resin of the said composition.

12. Composition according to any one of claims 1 to 11, characterised in that it contains one or more classic epoxy resins in addition to the epoxy resin or resins with sulphone groups, the said classic epoxy resins being in particular those such as diglycidyl ethers of A or F bisphenols, epoxyphenolnovolacs, epoxycresolnovolacs, methylene diamine or tetraphenylolethane tetraglycidyl ethers, para-aminophenol or triphenylolmethane triglycidyl ethers, epoxyhydantoins, epoxycyanurates, epoxy cycloaliphatics.

13. Composition according to claim 12, characterised in that the classic epoxy resin or resins have molecular weights of between 500 and 70 000 and preferably of between 800 and 50 000.

14. Composition according to any one of claims 1 to 13, characterised in that it contains one or more reactive diluants, and in particular one or more compositions such as alkanediol diglycidyl ethers, in particular diglycidyl ethers of butane diol, diglycidyl aniline or diglycidyl toluidine, epoxidised polyoxypropylenes, glycidyl phthalate.

**15.** Composition according to any one of claims 1 to 14, characterised in that it contains one or more placticisers, in particular selected from among functionalised flexible oligomers such as nitrile rubbers with carboxylic acid or amine end-groups or products such as bismaleimides, bisnorbornenylimides or biscyanates with a flexible skeleton, or from among thermoplastic polymers with a high molecular weight and compatible with epoxy resins, such as polyethersulphones, polyimides, acrylonitrile/butadiene/styrene terpolymers.

**16.** Composition according to claim 15, characterised in that its content of flexible agent represents 5 to 50 weight % of the composition.

**17.** Composition according to any one of claims 1 to 16, characterised in that it contains less than 30 weight % of one or more thermostable monomers, in particular selected from among bismaleimides and triazine bismaleimides.

**18.** Composition according to claims 1 to 17, characterised in that it contains an epoxy resin hardener consisting of bis(amino-4 phenol) sulphone.

**19.** Composition according to any one of claims 1 to 18, characterised in that at least one of the hardeners present in the composition is the product of the reaction between an epoxy resin hardener and one of the epoxy resins with sulphone groups.

**20.** Composition according to any one of claims 1 to 19, characterised in that the resin is distributed on the fibrous reinforcing material, in particular on the reinforcing material with long fibres, to form a preimpregnated material.

**21.** Composition according to any one of claims 1 to 20, characterised in that the reinforcing material contains, by volume, 50 to 100 % of carbon fibres and 50 to 0 % of fibres on one or more other types, for example aromatic polyamide fibres, ceramic fibres.

**22.** Composition according to any one of claims 1 to 21, characterised in that the fibrous reinforcing material is in the form of threads, strands, bands, fabric or sheets.

**23.** Composition according to any one of claims 1 to 22, characterised in that the reinforcing material is based on long carbon fibres with high elongation.

**24.** Composition according to any one of claims 1 to 23, characterised in that the volume of fibrous reinforcing material represents 20 to 80 % and preferably 40 to 70 % of the volume taken up by the epoxy resin and the reinforcing material.

**25.** Composites with fibrous reinforcement and in particular with long fibre reinforcement obtained by using a reinforced epoxy resin composition according to any one of claims 18 to 24.

**26.** Composites according to claim 25, characterised in that the fibrous reinforcement consists, for the most part, of carbon fibres.

**27.** Composites according to claim 25 or 26, characterised in that the fibrous reinforcing material is in the form of threads, strands, bands, fabric or sheets.

**28.** Composites according to any one of claims 25 to 27, characterised in that the reinforcing material consists of long carbon fibres and in particular of long carbon fibres with high elongation.

**29.** Composites according to any one of claims 25 to 29, characterised in that the volume of fibrous reinforcing material represents 20 to 80 % and preferably 40 to 70 % of the volume of the composite, i.e. the total volume taken up by the resin and the fibrous reinforcing material.

**30.** Epoxy resins with sulphone groups, characterised in that they belong to the group of epoxy resins with

sulphone groups corresponding to the following formulae (II) and (III):

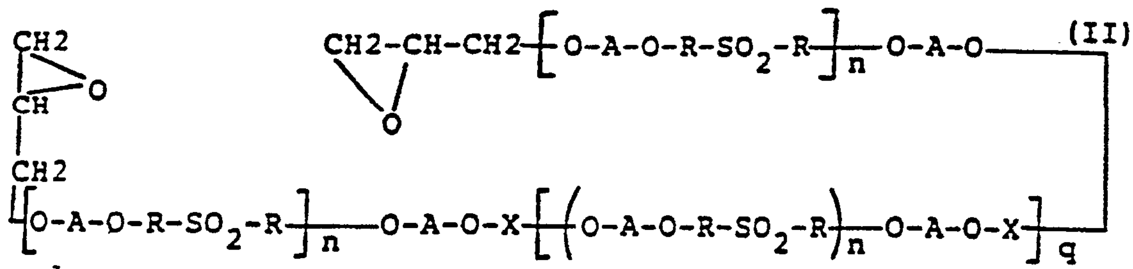

(II)

and

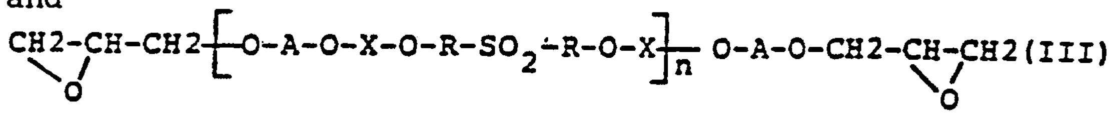

(III)

in which the symbols A and R, which are identical or different, designate C6 to C20 divalent aromatic radicals, X is the radical-CH2-CHOH-CH2-, q is equal to zero or 1 and n is a number between 1 and 500 and preferably between 1 and 200.

**31.** Resins according to claim 30, characterised in that, in their defining formula, the symbols A and R, which are identical or different, are selected from among C6 to C20 mononuclear divalent aromatic hydrocarbon residues, C12 to C20 polynuclear divalent aromatic residues with interlinked rings, C10 to C20 polynuclear divalent aromatic hydrocarbon residues with fused rings, divalent aromatic residues of the formula -Ar-Y-Ar- in which -Ar-is a C6 to C10 divalent aryl radical and -Y- represents -S-, -SO-, -SO2-, -O-, -CO-, and radicals derived from all these residues by substitution by one or more halogen atoms, in particular chlorine or fluorine, or by one or more C1 to C4 alcoxy radicals.

**32.** Resins according to claims 30 or 31, characterised in that the A radicals are selected from the group formed by the following radicals:

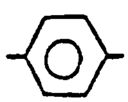 , 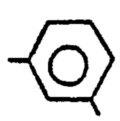 , 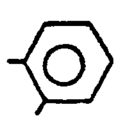 , 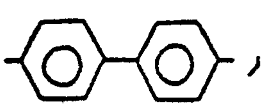 , 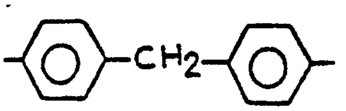 ,

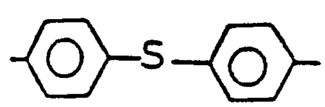 , 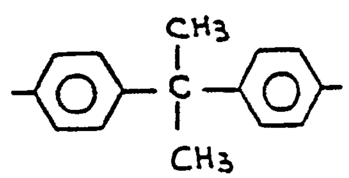 , 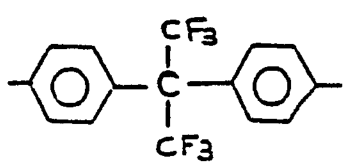 ,

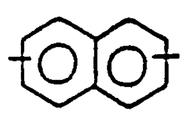 , 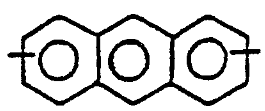

**33.** Resins according to any one of claims 30 to 32, characterised in that the group -R-$SO_2$-R- corresponds to the formula -R1-SO2-R1-, in which -R1- designates a C6 to C10 mononuclear divalent hydrocarbon aromatic residue, which may be subtituted by one or more halogen atoms, in particular chlorine or fluorine.

**34.** Resins according to any one of the claims 30 to 32, characterised in that the group -R-$SO_2$-R- corresponds to the formula:

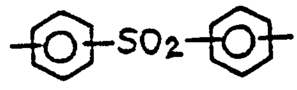

and preferably to the formula:

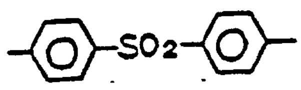

35. Resins according to any one of claims 30 to 34, characterised in that their molecular weights are between 500 and 70 000 and preferably between 800 and 50 000.

**Patentansprüche**

1. Verstärkte Vorläuferepoxidharzmasse für mit Kohlenstoff-Fasern verstärkte Verbundwerkstoffen bestehend aus einem oder mehreren polyfunktionellen, nicht gehärteten Epoxidharzen, einem oder mehreren Epoxidharzhärtern ausgewählt aus den aromatischen Diaminen und Dicyandiamid, und einem verstärkenden Fasermaterial wenigstens zur Hälfte bestehend aus Kohlenstoff-Fasern, dadurch gekennzeichnet, daß wenigstens eines der Epoxidharze in seinen Ketten ein oder mehrere zweiwertige -Z-Gruppen der Formel

$$-\left[O-A-(OX)_p-O-R-SO_2-R-(OX)_p\right]_n-$$

enthält, worin A und R, identisch oder verschieden, zweiwertige, aromatische Reste mit 6 bis 20 Kohlenstoffatomen bezeichnen, X einen $-CH_2-CHOH-CH_2$-Rest darstellt, p gleich 0 oder 1 ist und n eine Zahl zwischen 1 und 500 ist.

2. Masse nach Anspruch 1, dadurch gekennzeichnet, daß n in der den Rest - Z - definierenden Formel eine Zahl zwischen 1 und 200 ist.

3. Masse nach Anspruch 1 oder 2, dadurch gekennzeichnet, daß A und R in der den Rest - Z - definierenden Formel, identisch oder verschieden, ausgewählt sind aus den aromatischen, zweiwertigen, einkernigen Kohlenwasserstoffresten mit 6 bis 20 Kohlenstoffatomen, den aromatischen, zweiwertigen, mehrkernigen Resten mit 12 bis 20 Kohlenstoffatomen und verketteten Kernen, den aromatischen, zweiwertigen, mehrkernigen Kohlenwasserstoffresten mit 10 bis 20 Kohlenstoffatomen und kondensierten Kernen, den zweiwertigen, aromatischen Resten der Formel -Ar-Y-Ar-, worin -Ar- ein zweiwertiger Arylrest mit 6 bis 10 Kohlenstoffatomen ist und -Y- -S-, -SO-, $-SO_2-$, -O-, -CO-darstellt, sowie den von diesen Resten abgeleiteten Resten durch Substitution durch ein oder mehrere Halogenatome, insbesondere Chlor oder Fluor, oder durch ein oder mehrere Alkoxyreste mit 1 bis 4 Kohlenstoffatomen.

4. Masse nach einem der Ansprüche 1 bis 3, dadurch gekennzeichnet, daß wenigstens eines der Epoxidharze mit Sulfongruppen der nachstehenden Formel (I) entspricht:

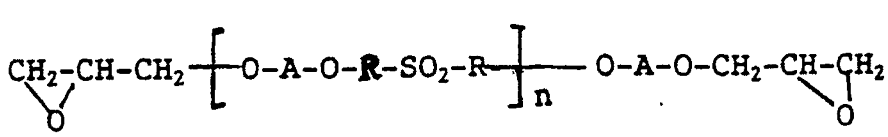

5. Masse nach einem der Ansprüche 1 bis 4, dadurch gekennzeichnet, daß wenigstens eines der Epoxidharze mit Sulfongruppen der nachstehenden Formel (II) entspricht:

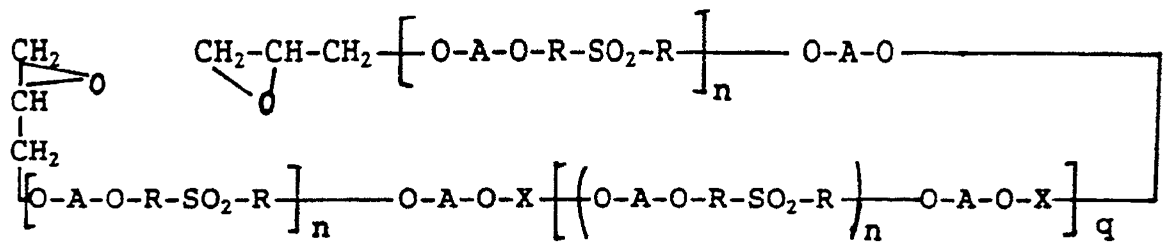

6. Masse nach einem der Ansprüche 1 bis 5, dadurch gekennzeichnet, daß wenigstens eines der Epoxidharze mit Sulfongruppen der nachstehenden Formel (III) entspricht:

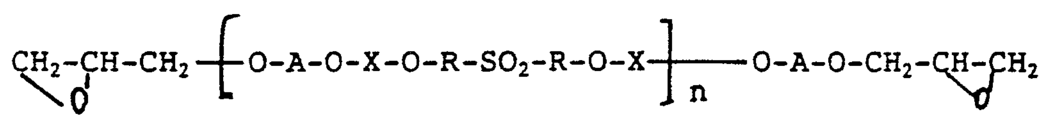

7. Masse nach einem der Ansprüche 1 bis 6, dadurch gekennzeichnet, daß die in den Epoxidharzketten mit Sulfongruppen vorliegenden -A-Reste aus den folgenden Resten ausgewählt sind:

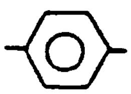 , 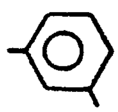 , 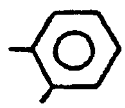 , 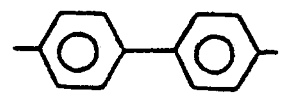 , 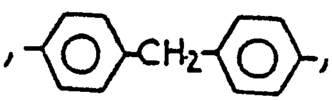 ,

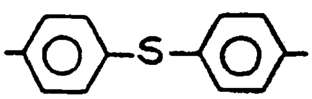 , 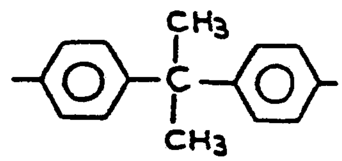 , 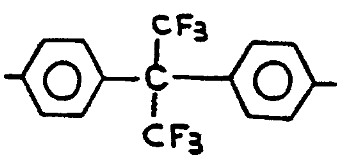 ,

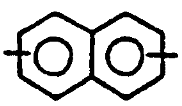 , 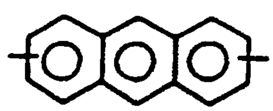

8. Masse nach einem der Ansprüche 1 bis 7, dadurch gekennzeichnet, daß die $-R-SO_2-R-$Gruppe der Epoxidharze mit Sulfongruppen der Formel $-R_1-SO_2-R_1-$ entspricht, worin $-R_1-$ einen aromatischen, zweiwertigen, einkernigen Kohlenwasserstoffrest mit 6 bis 10 Kohlenstoffatomen bezeichnet, der eventuell durch ein oder mehrere Halogenatome, insbesondere Chlor oder Fluor, substituiert ist.

9. Masse nach einem der Ansprüche 1 bis 7, dadurch gekennzeichnet, daß die $-R-SO_2-R-$Gruppe der Epoxidharze mit Sulfongruppen der Formel

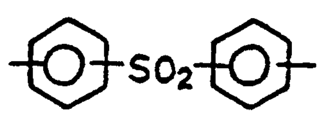

entspricht, vorzugsweise der Formel

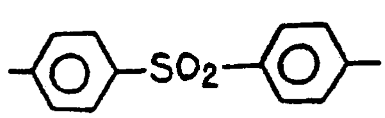

10. Masse nach einem der Ansprüche 1 bis 9, dadurch gekennzeichnet, daß die Epoxidharze mit Sulfongruppen Molekularmassen zwischen 500 und 70000 besitzen, vorzugsweise zwischen 800 und 50000.

11. Masse nach einem der Ansprüche 1 bis 10, dadurch gekennzeichnet, daß die Gewichtsmenge des darin enthaltenen Epoxidharzes mit Sulfongruppen 5 bis 100 %, vorzugsweise 5 bis 50 % der Gesamtgewichtsmenge des Epoxidharzes der Masse darstellt.

12. Masse nach einem der Ansprüche 1 bis 11, dadurch gekennzeichnet, daß sie ein oder mehrere konventionelle Epoxidharze zusätzlich zu dem Epoxidharz oder den Epoxidharzen mit Sulfongruppen enthält, wobei die konventionellen Epoxidharze insbesondere solche wie Diglycidylether der Bisphenole A oder F, Epoxidphenolnovolake, Epoxidcresolnovolake, Tetraglycidylether des Methylendiamins oder des Tetraphenylolethans, Triglycidylether des Paraaminophenols oder des Triphenylolmethans, Epoxidhydantoine, Epoxidcyanurate, Epoxidcycloaliphate sind.

13. Masse nach Anspruch 12, dadurch gekennzeichnet, daß das oder die konventionellen Epoxidharze Molekularmassen zwischen 500 und 70000, vorzugsweise zwischen 800 und 50000, aufweisen.

14. Masse nach einem der Ansprüche 1 bis 13, dadurch gekennzeichnet, daß sie ein oder mehrere reaktive Verdünnungsmittel enthält, insbesondere ein oder mehrere Verbindungen wie Alkandioldiglycidylether, insbesondere Butandioldiglycidylether, Diglycidylanilin oder Toluidin, Epoxidpolyoxypropylen, Glycidylphthalat.

15. Masse nach einem der Ansprüche 1 bis 14, dadurch gekennzeichnet, daß sie ein oder mehrere Flexibilisierungsmittel enthält, insbesondere ausgewählt aus den flexiblen, funktionalisierten Oligomeren wie Nitrilkautschuk mit Carbonsäure-oder Aminsäureendgruppen oder Produkten vom Typ Bismaleimid, Bisnorbornenylimid oder Biscyanat mit flexiblem Aufbau, oder aus den hochmolekularen thermoplastischen Polymeren, wie Polyethersulfon, Polyimid, Acrylonitril/Butadien/Styrol terpolymer, die mit den Epoxidharzen verträglich sind.

16. Masse nach Anspruch 15, dadurch gekennzeichnet, daß ihr Gehalt an Flexibilisierungsmittel 5 bis 50 Gew.-% der Masse ausmacht.

17. Masse nach einem der Ansprüche 1 bis 16, dadurch gekennzeichnet, daß sie weniger als 30 Gew.-% eines oder mehrerer thermostabiler Monomere enthält, insbesondere ausgewählt aus den Bismaleimiden und den Triazinbismaleimiden.

18. Masse nach einem der Ansprüche 1 bis 17, dadurch gekennzeichnet, daß sie als Epoxidharzhärter Bis-(amino-4-phenyl)sulfon enthält.

19. Masse nach einem der Ansprüche 1 bis 18, dadurch gekennzeichnet, daß wenigstens einer der in der Masse vorliegenden Härter aus einem Reaktionsprodukt eines Epoxidharzhärters mit einem der Epoxidharze mit Sulfongruppen besteht.

20. Masse nach einem der Ansprüche 1 bis 19, dadurch gekennzeichnet, daß das Harz auf das verstärkende Fasermaterial aufgebracht wird und insbesondere auf das verstärkende Material mit langen Fasern zur Vorimprägnierung.

21. Masse nach einem der Ansprüche 1 bis 20, dadurch gekennzeichnet, daß das verstärkende Material 50 bis 100 Vol.-% an Kohlenstoff-Fasern und 50 bis 0 % an Fasern eines oder mehrerer anderer Arten, zum Beispiel aromatische Polyamidfasern, Keramikfasern, enthält.

22. Masse nach einem der Ansprüche 1 bis 21, dadurch gekennzeichnet, daß das verstärkende Fasermaterial in Form von Fäden, Litzen, Bändern, Gewebe oder Vlies vorliegt.

23. Masse nach einem der Ansprüche 1 bis 22, dadurch gekennzeichnet, daß das verstärkende Material auf der Basis von langen Kohlenstoff-Fasern mit großer Dehnung vorliegt.

**24.** Masse nach einem der Ansprüche 1 bis 23, dadurch gekennzeichnet, daß das Volumen des verstärkenden Fasermaterials 20 bis 80 % darstellt, vorzugsweise 40 bis 70 Vol.-% des Epoxidharzes und des verstärkenden Materials.

**25.** Verbundwerkstoffe mit Faserverstärkung und insbesondere langen Fasern, erhalten mit Hilfe einer verstärkten Epoxidharzmasse nach einem der Ansprüche 18 bis 24.

**26.** Verbundwerkstoffe nach Anspruch 25, dadurch gekennzeichnet, daß die Faserverstärkung im wesentlichen aus Kohlenstoff-Fasern besteht.

**27.** Verbundwerkstoffe nach Anspruch 25 oder 26, dadurch gekennzeichnet, daß das verstärkende Fasermaterial in Form von Fäden, Litzen, Bändern, Gewebe oder Vlies vorliegt.

**28.** Verbundwerkstoffe nach einem der Ansprüche 25 bis 27, dadurch gekennzeichnet, daß das verstärkende Material aus langen Kohlenstoff-Fasern, insbesondere aus langen Kohlenstoff-Fasern mit großer Dehnung, besteht.

**29.** Verbundwerkstoffe nach einem der Ansprüche 25 bis 29, dadurch gekennzeichnet, daß das Volumen des verstärkenden Fasermaterials 20 bis 80 % beträgt, vorzugsweise 40 bis 70 % des Volumens des Verbundwerkstoffes, d.h. des Gesamtvolumens des Harzes und des verstärkenden Fasermaterials.

**30.** Epoxidharze mit Sulfongruppen, dadurch gekennzeichnet, daß sie zur Gruppe der Epoxidharze mit Sulfongruppen entsprechend den folgenden Formeln (II) und (III) gehören:

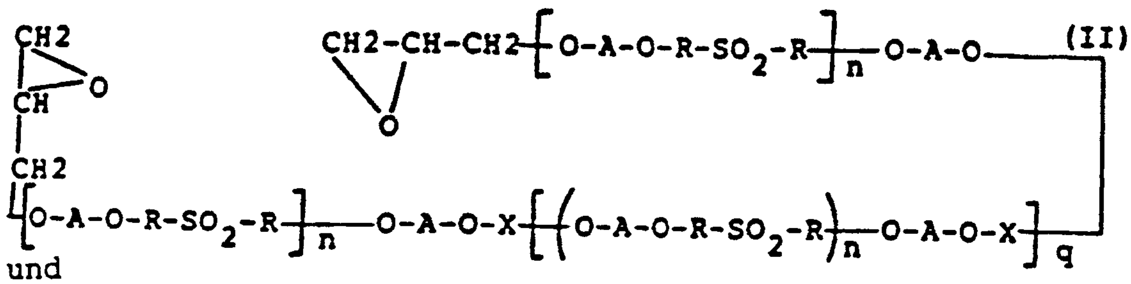
(II)

und

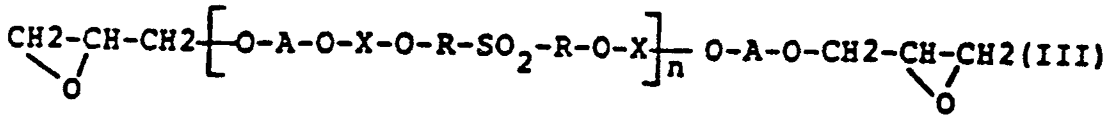
(III)

worin A und R, identisch oder verschieden, aromatische zweiwertige Reste mit 6 bis 20 Kohlenstoffatomen bedeuten, X den Rest $-CH_2-CHOH-CH_2-$ darstellt, q gleich 0 oder 1 ist und n eine Zahl zwischen 1 und 500, vorzugsweise zwischen 1 und 200 ist.

**31.** Harze nach Anspruch 30, dadurch gekennzeichnet, daß A und R in der die Harze bestimmenden Formel, identisch oder verschieden, ausgewählt sind aus den aromatischen, zweiwertigen, einkernigen Kohlenwasserstoffresten mit 6 bis 20 Kohlenstoffatomen, den aromatischen, zweiwertigen, mehrkernigen Resten mit 12 bis 20 Kohlenstoffatomen und verketteten Kernen, den aromatischen, zweiwertigen, mehrkernigen Kohlenwasserstoffresten mit 10 bis 20 Kohlenstoffatomen und kondensierten Kernen, den aromatischen, zweiwertigen Resten der Formel -Ar-Y-Ar-, worin -Ar- ein zweiwertiger Arylrest mit 6 bis 10 Kohlenstoffatomen ist und -Y- -S-, -SO-, $-SO_2-$, -O-, -CO- darstellt, und den von diesen Resten abgeleiteten Resten durch Substitution durch ein oder mehrere Halogenatome, insbesondere Chlor oder Fluor, oder durch ein oder mehrere Alkoxyreste mit 1 bis 4 Kohlenstoffatomen.

**32.** Harze nach Anspruch 30 oder 31, dadurch gekennzeichnet, daß die Reste A ausgewählt sind aus der Gruppe der folgenden Reste:

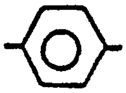 , 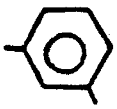 , 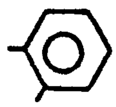 , 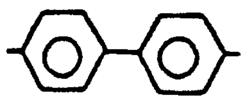 , 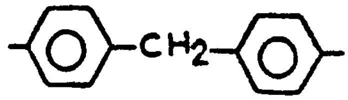 ,

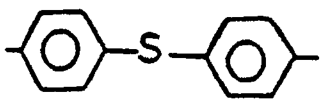 , 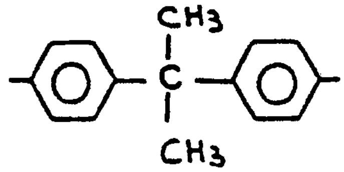 , 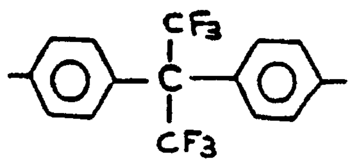 ,

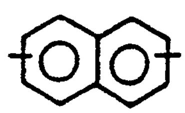 , 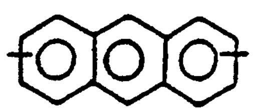

**33.** Harze nach einem der Ansprüche 30 bis 32, dadurch gekennzeichnet, daß die Gruppe $-R-SO_2R-$ der Formel $-R1-SO_2-R1$ entspricht, worin -R1- einen aromatischen, zweiwertigen, einkernigen Kohlenwasserstoffrest mit 6 bis 10 Kohlenstoffatomen bedeutet, der eventuell durch ein oder mehrere Halogenatome, insbesondere Chlor oder Fluor, substituiert ist.

**34.** Harze nach einem der Ansprüche 30 bis 32, dadurch gekennzeichnet, daß die Gruppe $-R-SO_2-R-$ der Formel

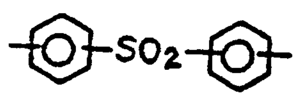

entspricht, vorzugsweise der Formel

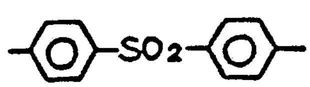

**35.** Harze nach einem der Ansprüche 30 bis 34, dadurch gekennzeichnet, daß ihre Molekularmasse zwischen 500 und 70000, vorzugsweise zwischen 800 und 50000 beträgt.